# EUROPÄISCHE PATENTSCHRIFT

(11) **EP 2 076 568 B1**
(45) Veröffentlichungstag und Bekanntmachung des Hinweises auf die Patenterteilung: **23.05.2012**
(21) Anmeldenummer: 07821030.9
(22) Anmeldetag: 08.10.2007
(51) Int. Cl.: C08G 18/38, C08G 18/48, C08G 18/71, C08L 101/10, C09D 201/10

(54) **ZUSAMMENSETZUNGEN AUS TEILWEISE SILYLTERMINIERTEN POLYMEREN**
COMPOSITIONS CONSISTING OF PARTIALLY SILYL-TERMINATED POLYMERS
COMPOSITIONS CONSTITUÉES DE POLYMÈRES PARTIELLEMENT TERMINÉS PAR DES GROUPES SILYLE

(30) Priorität: 09.10.2006 DE 102006048041
(43) Veröffentlichungstag der Anmeldung: 08.07.2009
(73) Patentinhaber: Henkel AG & Co. KGaA, 40589 Düsseldorf (DE)
(72) Erfinder: BRAUN, Daniela, Shanghai 200120 (CN); KLEIN, Johann, 40593 Düsseldorf (DE); BACHON, Thomas, 40597 Düsseldorf (DE); BOLTE, Andreas, 40627 Düsseldorf (DE); KUNZE, Christiane, 51061 Köln (DE)
(86) Internationale Anmeldenummer: PCT/EP2007/060657
(87) Internationale Veröffentlichungsnummer: WO 2008/043735

(56) Entgegenhaltungen:
- WO-A-2005/042601
- WO-A-2005/042605
- WO-A-2005/042607
- WO-A-2005/042609
- WO-A-2006/034411
- US-A1- 2004 127 671

## Beschreibung

Die vorliegende Erfindung betrifft eine härtbare Zusammensetzung, umfassend mindestens ein Polymer A mit mindestens einer reaktiven Silylgruppe und mindestens ein Polymer B mit mindestens einer reaktiven Silylgruppe, wobei die Zahl der reaktiven Silylgruppen im Polymer A größer oder gleich der Zahl der Silylgruppen im Polymer B ist und die reaktiven Silylgruppen unter Ausbildung von Siloxanbindungen vernetzen können. Weiterhin betrifft die Erfindung Zubereitungen, die eine solche Zusammensetzung enthalten und die Verwendung von solchen Zusammensetzungen und solche Zusammensetzungen enthaltenden Zubereitungen.

Silanvernetzende Kleb- und Dichtstoffmassen enthalten als Bindemittel alkoxysilanterminierte oder acyloxysilanterminierte Polymere. Polymersysteme, die über reaktive Alkoxysilylgruppen verfügen, sind seit langem bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetze Systeme (Duroplaste).

Die Polymere weisen in der Regel ein organisches Grundgerüst auf, das Alkoxysilangruppen trägt. Bei dem organischen Grundgerüst kann es sich beispielsweise um Polyurethane, Polyester, Polyether, Polyole, Poly(meth)acrylate, Polyvinylalkohole etc. handeln.

DE 197 27 029 A1 offenbart eine einkomponentige Reaktivsystem-Zusammensetzung, die ein alkoxysilanterminiertes Polyurethan, einen Aushärtungskatalysator sowie gegebenenfalls übliche Zusatzstoffe enthält.

In WO 99/48942 A1 sind alkoxysilanterminierte Polyurethane und entsprechende polyurethanhaltige Zubereitungen beschrieben, die neben den alkoxysilylierten Polyurethanen Lösemittel, Katalysatoren, Weichmacher, Reaktivverdünner, Füllstoffe und dergleichen enthalten können.

EP333222 B1 beansprucht eine härtbare Polymerzusammensetzung, umfassend ein silyliertes Polymer auf Alkyl(meth)acrylat-Basis, ein silyliertes Polymer auf Oxyalkylen-basis, eine siliciumhaltige Verbindung und einen Härtungsbeschleuniger.

In US3971751 werden silylterminierte Polymere, die im Backbone im wesentlichen Polyoxyalkyleneinheiten enthalten für die Anwendung im Bereich Dicht- und Klebstoffe, offenbart.

US3278457 offenbart die Herstellung von hochmolekularen Polyoxyalkylenpolymeren mit hoher Molmassenverteilung durch so genannte Double-Metal-Cyanide-Katalyse.

In der EP0397036 wird die Einbringung von zur Vernetzung befähigten reaktiven Silylgruppen an solche Polyoxyalkylenpolymeren, beispielsweise über das Verfahren der Hydrosilylierung, beschrieben.

Aus der US5364955 ist als weitere Methode zur Anbringung von zur Vernetzung befähigten reaktiven Silylgruppen an solche Polyoxyalkylenpolymere die Umsetzung von Isocyanat-terminierten Polymeren bestehend aus einem Polyoxyalkylengrundgerüst mit Aminosilanen beschrieben.

In der EP1678254A1 wird zur Anbringung von reaktiven Silylgruppen an Polyoxyalkylen-Grundgerüste ein hydroxylterminierte Polyoxyalkylenpolymeren (Polyether-Polyole) mit Isocyanatosilanen umgesetzt.

EP1678254A1 offenbart polymere Zusammensetzungen aus gemischten Oxyalkyleneinheiten, wobei sowohl Mischungen aus Polymeren, die aus verschiedenen Oxyalkyleneinheiten aufgebaut sind, als auch Polymere, die aus unterschiedlichen Oxyalkyleneinheiten aufgebaut sind, umfasst sind.

EP327017 B1 beansprucht eine härtende Zusammensetzung, umfassend ein silyliertes Oxyalkylenpolymer, einen polymeren Weichmacher mit einer gemittelten (Zahlenmittel) molaren Masse von 500 bis 15000 g/mol und flüssiges Polybutadien.

Die WO2005/042605 offenbart feuchtigkeitshärtende Polyether-Urethane, die alkoxysilan-funktionell ausgerüstet sind. Hierbei werden die reaktiven Silylgruppen an das Polyoxyalkylenpolymer, welches später mindestens zwei reaktive Silylgruppen trägt, durch Umsetzung des Polyoxyalkylenpolymers, welches gegenüber Isocyanatgruppen reaktive Gruppen enthält, mit Isocyanathaltigen Silanen angebracht. An das Polyoxyalkylenpolymer, welches später eine reaktive Silylgruppe enthält, erfolgt die Einbringung dieser Silylgruppe durch Umsetzung eines Aminosilans mit einer Isocyanat-Gruppe. Diese Methode führt dazu, dass die Zusammensetzung Polymere enthält, welche Harnstoffgruppen enthält. Harnstoffgruppen jedoch können die viskoelastischen bzw. plastischen Eigenschaften der ausgehärteten Zusammensetzungen sowie die Verarbeitbarkeit der härtbaren Zusammensetzungen negativ beeinflussen.

Bei allen feuchtigkeitshärtenden Polyurethanen oder solche Polyurethane enthaltenden Zubereitungen (Systeme), insbesondere jedoch bei den siliziumhaltigen Systemen, wirkt sich in der Regel nachteilig aus, daß die Systeme nach der Verarbeitung durch den Aushärtvorgang verspröden und damit einen großen Teil ihrer Elastizität verlieren bzw. geringe Weiterreißfestigkeiten zeigen. Der Elastizitätsverlust tritt insbesondere häufig in der Kälte auf, bei Abkühlung verlieren die bekannten Systeme häufig ihre Rückstellfähigkeit und Flexibilität. Der Versuch die Elastizität und Flexibilität der ausgehärteten Systeme zu verbessern führt jedoch oft zu einer Verschlechterung anderer Materialeigenschaften, beispielsweise einer höheren Klebrigkeit der Oberfläche, oder die Systeme haben vor der Verarbeitung eine so hohe Viskosität, daß beispielsweise Lösemittel eingesetzt werden müssen, um die Verarbeitbarkeit zu gewährleisten. Ebenfalls häufig beobachtet wird eine Verringerung der Lagerstabilität der Systeme. Sowohl die Verschlechterung wesentlicher Material- oder Lagereigenschaften als auch die Verwendung von Lösemitteln ist ökonomisch und ökologisch nicht sinnvoll.
Auch der Einsatz von Weichmachern kann in einem solchem System oftmals die viskoelastischen Eigenschaften nicht wesentlich verbessern.
Beispielsweise ist es zumeist für den Einsatz in Dichtstoffen und hochelastischen Klebstoffen erforderlich, niedermolekulare Weichmacher, wie beispielsweise Phtalate, in die Zusammensetzungen einzubringen, um die erforderliche Elastizität zu erreichen. Nicht nur dass diese Weichmacher oftmals toxikologisch bedenklich sind, die Einbringung von niedermolekularen Verbindungen bewirkt sogar in der Regel eine Verschlechterung der viskoelastischen Eigenschaften der Zubereitungen, wie zum Beispiel eine Erhöhung der Viskosität der härtbaren Zusammensetzung. Des Weiteren beeinflusst die Zugabe von niedermolekularen Weichmachern die Rückstellkraft der ausgehärteten Zusammensetzungen negativ, d.h. die ausgehärteten Massen weisen eine nicht ausreichende Rückstellkraft auf.
Auch hochmolekularen Weichmacher beeinträchtigen die Verarbeitbarkeit der ungehärteten Zusammensetzungen teilweise beträchtlich. Weiterhin kann der Einsatz von hochmolekularen Weichmachern die elastischen Eigenschaften und die Rückstellkraft der ausgehärteten Zusammensetzung ungünstig beeinflussen.

Es war daher eine Aufgabe der vorliegenden Erfindung eine Zusammensetzung zur Verfügung zu stellen, die bei einer Verwendung mit reaktiven Endgruppen die oben genannten Nachteile nicht aufweist.

Insbesondere war es Aufgabe der vorliegenden Erfindung eine Zusammensetzung zur Verfügung zu stellen, welche über eine oder mehrere Alkoxysilangruppen vernetzbar bzw. härtbar ist und trotzdem verbesserte viskoelastische und mechanische Eigenschaften aufweist, und auch bei niedrigen Temperaturen, über hervorragende Elastizität, Flexibilität und Weiterreißfestigkeit verfügt.
Weiterhin war es Aufgabe der vorliegenden Erfindung eine Zubereitung bzw. Kleb-, Dicht- oder Beschichtungsstoffe zur Verfügung zu stellen, die die erfindungsgemäße Zusammensetzung enthält und deren Viskosität eine gute Verarbeitbarkeit bedingt bzw. die trotz niedriger Viskosität gute Materialeigenschaften des vernetzten bzw. ausgehärteten Produkts gewährleistet, insbesondere eine gute Stabilität bei UV- oder Wasserbelastung auf Glasoberflächen.
Insbesondere war es Aufgabe der vorliegenden Erfindung Kleb-, Dicht- oder Beschichtungsstoffe bereitzustellen, welche sich im ausgehärteten Zustand durch ein besonders niedriges Elastizitätsmodul bei gleichzeitig hohem Rückstellvermögen nach Wegfall der Zugspannung auszeichnen.

Es wurde überraschenderweise gefunden, dass eine härtbare Zusammensetzung, umfassend mindestens ein Polymer A und mindestens ein Polymer B, welche jeweils mindestens eine reaktive Silylgruppe aufweisen, wobei die Zahl der reaktiven Silylgruppen im Polymer A größer oder gleich der Zahl der Silylgruppen im Polymer B ist und die reaktiven Silylgruppen unter Ausbildung von Siloxanbindungen vernetzen können, die oben genannten Nachteile des Stand der Technik nicht aufweisen.

Es konnte gezeigt werden, dass die erfindungsgemäßen Zusammensetzungen niedrige Elastizitätsmodule aufweisen und somit hohe Elastizität bei sehr guten Dehnbarkeitswerten aufzeigen. Weiterhin konnte gezeigt werden, dass die erfindungsgemäßen Zusammensetzungen trotz niedrigem Elastizitätsmodul, gleichzeitig sehr gute Rückstellvermögen aufzeigen.

Weiterhin wurde gefunden, dass durch Variation des Anteils und der Art der nicht reaktiven Gruppen am Polymer B in der Zusammensetzung, das Elastizitätsverhalten über einen weiten Bereich eingestellt werden kann.
Ferner kann die Aushärtezeit durch beispielsweise Erhöhung des Anteils der isocyanathaltigen Silanverbindung, welche die reaktive Silylgruppe an das organische Grundgerüst einbringt, beschleunigt werden.

Gegenstand der Erfindung ist daher eine härtbare Zusammensetzung, umfassend (i) mindestens ein Polymer A mit mindestens einer reaktiven Silylgruppe und (ii) mindestens ein Polymer B mit mindestens einer reaktiven Silylgruppe, wobei die Zahl der reaktiven Silylgruppen in (i) größer oder gleich der Zahl der Silylgruppen in (ii) ist und die reaktiven Silylgruppen unter Ausbildung von Siloxanbindungen vernetzen können.

Vorzugsweise ist hierbei das Polymer A mit mindestens einer reaktiven Silylgruppe verschieden von dem Polymer B mit mindestens einer reaktiven Silylgruppe, insbesondere ist die Zahl der reaktiven Silylgruppen im Polymer A hierbei vorzugsweise größer als die Zahl der reaktiven Silylgruppen im Polymer B.

Das Polymer A in der erfindungsgemäßen härtbaren Zusammensetzung ist vorzugsweise eine Verbindung der allgemeinen Formel (I)

(X₃)(X₂)(X₁)Si-T-Z-[Y]-Z'-T'-Si(X₁')(X₂')(X₃') (I)

wobei X₁, X₂, X₃, X₁', X₂', X₃ unabhängig voneinander ein Halogenatom, eine Amino, Mercapto- oder Alkenyloxygruppe, ein Alkylrest mit 1 bis 40 C-Atomen oder ein Rest OR¹ darstellen kann, wobei R¹ ein Alkylrest mit 1 bis 40 C-Atomen oder ein Acylrest mit 1 bis 40 C-Atomen ist,
T und T unabhängig voneinander ein geradkettiger oder verzweigter, substituierter oder unsubstituierter Alkylenrest mit 1 bis 20 C-Atomen sind,
Z, Z' unabhängig voneinander eine Carbamat-, Carboxy-, Carbonat- oder Sulfonatgruppe oder ein Sauerstoffatom sind,
[Y] ein organisches Grundgerüst ist.

Bevorzugt sind X₁, X₂, X₃, X₁', X₂', X₃' hierbei Alkylreste mit 1 bis 40 C-Atomen, insbesondere 1 bis 4 C-Atomen, vorzugsweise Methyl, Ethyl, Propyl, Butyl, oder ein Rest OR¹ wobei R¹ insbesondere ein Alkylrest mit bevorzugt 1 bis 4 C-Atomen, bevorzugt Methyl, Ethyl, Propyl, Butyl oder ein Acylrest mit bevorzugt 1 bis 4 C-Atomen ist.
T und T sind unabhängig voneinander bevorzugt geradkettige oder verzweigte, substituierte oder unsubstituierte Alkylenreste mit 1 bis 8 C-Atomen, insbesondere ein Methylen-, Ethylen-, Propylen-oder Butylen-Rest. T und T' können gleich (T = T') oder verschieden (T ≠ T') voneinander sein.

Das Polymer A enthält mindestens eine reaktive Silylgruppe. Das bedeutet, dass mindestens einer der Reste X₁, X₂, X₃, X₁', X₂' oder X₃' in der allgemeinen Formel (I) einen hydrolysierbaren Rest darstellt. Besonders bevorzugt handelt es sich dabei um eine Alkoxygruppe, d.h. einen Rest OR¹, wobei R¹ ein Alkylrest mit 1 bis 40 C-Atomen, insbesondere 1 bis 4 C-Atomen, ist.

Das Polymer B in der erfindungsgemäßen härtbaren Zusammensetzung ist vorzugsweise eine Verbindung der allgemeinen Formel (II)

(X₃)(X₂)(X₁)Si-T-Z-[Y]-G-R² (II)

wobei X₁, X₂, X₃ unabhängig voneinander ein Halogenatom, eine Amino, Mercapto- oder Alkenyloxygruppe, ein Alkylrest mit 1 bis 40 C-Atomen oder ein Rest OR¹ darstellen kann, wobei R¹ ein Alkylrest mit 1 bis 40 C-Atomen oder ein Acylrest mit 1 bis 40 C-Atomen ist,
T ein geradkettiger oder verzweigter, substituierter oder unsubstituierter Alkylenrest mit 1 bis 20 C-Atomen ist,
Z eine Carbamat-, Carboxy-, Carbonat- oder Sulfonatgruppe oder ein Sauerstoffatom ist,
[Y] ein organischen Grundgerüstes ist,
G eine Carbamat-, Carboxy-, Carbonat- oder Sulfonatgruppe oder ein Sauerstoffatom oder eine Gruppe - E - D - E'- ist,
   wobei E eine Carbamat-, Carboxy-, Carbonat- oder Sulfonatgruppe oder ein Sauerstoffatom,
   E' eine Carbamat-, Carboxy-, Carbonat- Sulfonat- oder Harnstoffgruppe oder ein Sauerstoffatom,
   D ein geradkettiger oder verzweigter, substituierter oder unsubstituierter Alkylen-, Acylen- oder
   Arylenrest mit 1 bis 40 C-Atomen ist, bevorzugt Methylen, Ethylen, Propylen oder Butylen, ist,
R² ein geradkettiger oder verzweigter, substituierter oder unsubstituierter, gesättigter oder ungestättigter Alkyl-, Acyl- oder Arylrest mit 1 bis 40 C-Atomen oder eine Silylgruppe ist, welche nicht zur Ausbildung von Siloxanbindungen befähigt ist.

Die (X₃)(X₂)(X₁)Si -Einheit bzw. (X₁')(X₂')(X₃')Si- Einheit in Formel (I) bzw. (II) stellen hierbei reaktive Silylgruppen dar, die im Folgenden noch unter dem Begriff Silizium-Strukturelement der allgemeinen Formel (IIIa bzw. IIIb) näher erläutert werden.

Bevorzugt sind X₁, X₂, X₃ in Formel (II) Alkylreste mit 1 bis 40 C-Atomen, insbesondere 1 bis 4 C-Atomen, vorzugsweise Methyl, Ethyl, Propyl, Butyl, oder ein Rest OR¹ wobei R¹ insbesondere ein Alkylrest mit bevorzugt 1 bis 4 C-Atomen, bevorzugt Methyl, Ethyl, Propyl, Butyl oder ein Acylrest mit bevorzugt 1 bis 4 C-Atomen ist.
T ist hierbei bevorzugt ein geradkettiges oder verzweigtes, substituiertes oder unsubstituiertes Alkylenrest mit 1 bis 8 C-Atomen, insbesondere, Ethylen, Propylen oder Butylen.
Bevorzugte Alkylreste R² sind insbesondere substituiertes oder unsubstituiertes
-CH₃ (Methyl), -CH₂-CH₃ (Ethyl), -CH₂-CH₂- CH₃ (Propyl), -CH₂-CH₂-CH₂- CH₃ (Butyl), -CH₂-CH₂-CH₂-CH₂- CH₃ (Hexyl), -CH₂-CH₂-CH₂-CH₂-CH₂- CH₃ (Heptyl), -CH₂-CH₂-CH₂-CH₂-CH₂-CH₂-CH₂- CH₃ (Octyl), aber auch die verzweigten Derivate davon, wie iso-Propyl und tert-Butyl.

Das Polymer B enthält mindestens eine reaktive Silylgruppe. Das bedeutet, dass mindestens einer der Reste X₁, X₂ oder X₃, in der allgemeinen Formel (II) einen hydrolysierbaren Rest darstellt. Besonders bevorzugt handelt es sich dabei um eine Alkoxygruppe, d.h. einen Rest OR¹, wobei R¹ ein Alkylrest mit 1 bis 40 C-Atomen, insbesondere 1 bis 4 C-Atomen, ist.

Durch die Wahl des geeigneten organischen Grundgerüstes (Y) können die Eigenschaften der härtbaren Zusammensetzungen maßgeblich beeinflusst werden.
Geeignete organische Grundgerüste (Y), umfassen vorzugsweise polymere Verbindungen, wie Alkydharze, ölmodifizierte Alkydharze, ungesättigte Polyester, natürliche Öle, z. B. Leinöl, Tungöl, Sojabohnenöl, sowie Epoxide, Polyamide, thermoplastische Polyester wie z. B. Polyethylenterephthalat und Polybutylenterephthalat, Polycarbonate, Polyalkylene, wie z.B. Polyethylene und Polybutylene, Polystyrole, Polypropylene, Ethylenpropylenco- und Terpolymere, Acrylate, z. B. Homo- und Copolymere von Acrylsäure, Acrylaten, Methacrylaten, Acrylamiden, ihren Salzen und dergleichen, Phenolharze, Polyoxymethylenhomo- und -copolymere, Polyurethane, Polysulfone, Polyoxyalkylene, Polysulfidkautschuke, Nitrocellulose, Vinylbutyrate, Vinylpolymere, z. B. Vinylchlorid und/oder Vinylacetat enthaltende Polymere, Ethylcellulose, Celluloseacetate und -butyrate, Reyon, Schellack, Wachse, Ethylencopolymere wie z. B. Ethylenvinylacetatcopolymere, Ethylenacrylsäurecopolymere, Ethylenacrylatcopolymere, organische Kautschuke, Silikonharze und dergleichen. Weitere Beispiele schließen Polyether wie Polyethylenoxid, Polypropylenoxid, Propylenglycol und Polytetrahydrofuran, Polyol, Poly(meth)acrylat, Polyvinylalkohol ein.
Bevorzugte organische Grundgerüste sind Polyether, Polyester, Polyurethane und Polyole, insbesondere Polyether wie z.B. Polypropylenglycol ist bevorzugt. In einer besonders bevorzugten Form handelt es sich bei dem organischen Grundgerüst um ein Polyoxyalkylenpolymer, welches durch eine ringöffnende Polymerisation einer Oxyalkylenverbindung durch Double-Metal-Cyanide Katalyse hergestellt wurde.
Bei dem organischen Grundgerüst (Y) kann es sich auch um Co-Polymere der oben genannten Polymere handeln. Bevorzugte Polyoxyalkylenpolymere sind Polyoxyethylen, Polyoxypropylen, Polyoxybutylen, polyoxyhexylen, Polyoxytetramethylen oder Co-Polymere daraus.
Beispielsweise kann durch die Wahl geeigneter Oxyalkyleneinheiten in gewissen Rahmen die viskoelastischen Eigenschaften der härtbaren Zusammensetzungen gesteuert werden. Daher hat sich für die Verwendung in Dichtstoffen sowie für Klebstoffe, bei denen ein relativ niedriges Elastizitätsmodul gewünscht ist, sich die Verwendung von Polymeren, welche im organischen Grundgerüst im wesentlichen Polyoxyalkyleneinheiten enthalten, als besonders vorteilhaft erwiesen.

Eine reaktive Silylgruppe im Sinne der vorliegenden Erfindung ist ein Silizium-Strukturelement der allgemeinen Formel (IIIa) bzw. (IIIb)

-Si(X₁)(X₂)(X₃) (IIIa)

-Si(X₁')(X₂')(X₃') (IIIb)

in der mindestens eines der Reste X₁, X₂, X₃, X₁', X₂' oder X₃' einen hydrolysierbaren Rest darstellt, und X₁, X₂, X₃, X₁', X₂' oder X₃' unabhängig voneinander ein Halogenatom, Wasserstoffatom, Acyloxy-, Amino-, Mercapto- oder Alkenyloxygruppe sein kann oder ein Alkylrest mit 1 bis 40 C-Atomen oder ein Alkoxy- bzw. Aclyoxyrest OR' darstellen kann, wobei R¹ ein Alkylrest mit 1 bis 40 C-Atomen, bevorzugt 1 bis 4 C-Atomen oder ein Acylrest mit 1 bis 40 C-Atomen ist.
Die hydrolysierbaren Reste X₁, X₂, X₃, X₁', X₂' und X₃' der reaktiven Silylgruppe (IIIa bzw. b) gehen im Allgemeinen eine Hydrolysereaktion ein, bei der Silanolgruppen aus der Reaktion mit z.B. Wasser (Feuchtigkeit) erzeugt werden (Reaktion: -SiX + H2O → SiOH + HX) und die so erzeugten Silanolgruppen im Anschluss darauf unter Erzeugung von Siloxanbindungen kondensieren (Kondensationsreaktion).
Bevorzugt sind X₁, X₂, X₃, X₁', X₂' und X₃' in Formel (IIIa bzw. b) eine Alkoxy- und / oder Alkylgruppe. Insbesondere sind X₁, X₂ und X₃bzw. X₁', X₂' und X₃' eine Kombination aus Methoxy oder Ethoxy und/ oder Methyl, Ethyl, Propyl, Isopropyl n-Butyl oder iso-Butyl, besonders bevorzugt Methoxy oder Ethoxy und/ oder Methyl oder Ethyl. Beispiele hierfür sind Trimethoxy-, Triethoxy-, Dimethoxymethyl-, Dimethoxyethyl-, Dimethoxypropyl-, Dimethoxybutyl-, Diethoxymethyl-, Diethoxyethyl-, Diethoxypropyl-, Diethoxybutyl-, Methoxydimethyl-, Methoxydiethyl-, Methoxydipropyl-, Methoxydibutyl-, Ethoxydimethyl-, Ethoxydiethyl-, Ethoxydipropyl-, Ethoxydibutyl-silylgruppen.
Bevorzugt sind Alkoxydialkylsilygruppen, d.h. Silygruppen der Formel IIIa bzw. IIIb mit X₁ = OR' bzw. X₁' = OR¹. Ganz besonders bevorzugt weist die reaktive Silylgruppe (IIIa bzw. b) zwei oder drei Alkoxygruppen, dabei bevorzugt zwei Methoxy- und eine Alkylgruppe oder drei Methoxygruppen, auf, d.h. es handelt sich um Dialkyoxyalkylsilygruppen mit X₁ = OR¹ und X₂ = OR¹ bzw. X₁' = OR' und X₂' = OR¹ oder Trialkoxysilygruppen mit X₁ = OR¹, X₂ = OR¹ und X₃ = OR' bzw. X₁' = OR¹, X₂' = OR' und X₃'= OR¹, wobei OR' bevorzugt jeweils eine Methoxygruppe ist.

Unter einer "Carbamatgruppe" wird im Rahmen der vorliegenden Erfindung ein Strukturelement der allgemeinen Formel (IV) verstanden 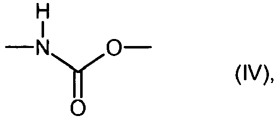 wobei die Bindung der Carbamatgruppe im Polymer A und B sowohl über die Stickstoffgruppe als auch über den Sauerstoff an T bzw. T' erfolgen kann, bevorzugt wird jedoch die Verknüpfung des Stickstoffs an T bzw. T'.

Unter einer "Carboxygruppe" wird im Rahmen der vorliegenden Erfindung eine Atomgruppierung - COO - verstanden, wobei auch hier die Bindung an T bzw. T' über das Kohlenstoffatom oder über das Sauerstoffatom erfolgen kann.

Unter ein "Acyl- bzw. Acylenrest" wird im Rahmen der vorliegenden Erfindung eine Atomgruppierung verstanden, die formal aus Säuren durch Abspaltung einer OH-Gruppe entsteht, beispielsweise aus Carbonsäure-Reste -CO- oder Sulfonsäure -SO₂-. Ein Acyl- bzw. Acylenrest ist bevorzugt ausgewählt aus
-CO -, - NH-CO- (Acylamino) oder -O-CO- (Acyloxy), -CO-NR₂ (Carbamoyl), -P(O)R₂ (Phosphinoyl).

Unter "Alkylenreste" werden im Rahmen der vorliegenden Erfindung divalente Alkylreste verstanden, d.h. Alkyle, die an beiden Seiten noch eine Bindung eingehen können. Bevorzugte Alkylenreste sind beispielsweise substituierte oder unsubstituierte, gesättigte oder ungesättigte Alkylenreste mit 1 bis 40 C-Atomen. Bevorzugte Verbindungen sind ausgewählt aus beispielsweise
-CH₂- (Methylen), -CH₂-CH₂- (Ethylen), -CH₂-CH₂-CH₂- (Propylen), -CH₂-CH₂-CH₂-CH₂- (Butylen), - CH₂-CH₂-CH₂-CH₂-CH₂- (Hexylen), -CH₂-CH₂-CH₂-CH₂-CH₂-CH₂- (Heptylen), -CH₂-CH₂-CH₂-CH₂-CH₂-CH₂-CH₂-CH₂- (Octylen), aber auch die verzweigten Derivate davon, wie iso-Propylen, tert-Butylen.

Unter eine "Silylgruppe, welche nicht zur Ausbildung von Siloxanbindungen befähigt sind" werden im Rahmen der vorliegenden Erfindung Verbindungen verstanden, die Silylgruppen tragen, welche jedoch nicht reaktiv sind, so dass sie nicht zur Vernetzung der härtbaren Zusammensetzung beitragen. Solche Silylgruppen können durch ein Strukturelement der allgemeinen Formel (V) dargestellt werden

- Si(R³)₃ (V),

wobei R³ unabhängig voneinander ein substituierter oder nicht substituierter, cyclischer oder nicht cyclischer, gesättigter oder ungesättigter Alkylrest mit 1 bis 20 C-Atomen oder ein substituierter oder nicht substituierter Aromat ist.
Bevorzugt ist R³ ein Alkylrest mit 1 bis 8 C-Atomen, insbesondere substituierte oder unsubstituierte Alkylreste, wie beispielsweise
-CH₃ (Methyl), -CH₂-CH₃ (Ethyl), -CH₂-CH₂- CH₃ (Propyl), -CH₂-CH₂-CH₂- CH₃ (Butyl), -CH₂-CH₂-CH₂-CH₂- CH₃ (Hexyl), -CH₂-CH₂-CH₂-CH₂-CH₂- CH₃ (Heptyl), -CH₂-CH₂-CH₂-CH₂-CH₂-CH₂-CH₂- CH₃ (Octyl), aber auch die verzweigten Derivate davon, wie iso-Propyl, tert-Butyl.

Unter einer "Harnstoffgruppe" (E') wird im Rahmen der vorliegenden Erfindung ein Strukturelement der allgemeinen Formel (VI) verstanden 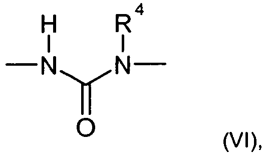 wobei die Bindung der Harnstoffgruppe über das Stickstoffatom, das R⁴ trägt, als auch über das Stickstoffatom, das das Wasserstoffatom trägt, an D erfolgen kann.
Der Rest R⁴ kann alle denkbaren Reste darstellen, vorzugsweise ein Wasserstoffatom oder ein substituierter oder unsubstituierter, cyclischer oder nicht cyclischer, gesättigter oder ungesättigter Alkylrest mit 1 bis 20 C-Atomen, insbesondere substituierte oder unsubstituierte Alkylrest, wie beispielsweise
-CH₃ (Methyl), -CH₂-CH₃ (Ethyl), -CH₂-CH₂- CH₃ (Propyl), -CH₂-CH₂-CH₂- CH₃ (Butyl), -CH₂-CH₂-CH₂-CH₂- CH₃ (Hexyl), -CH₂-CH₂-CH₂-CH₂-CH₂- CH₃ (Heptyl), -CH₂-CH₂-CH₂-CH₂-CH₂-CH₂-CH₂- CH₃ (Octyl), aber auch die verzweigten Derivate davon, wie iso-Propyl, tert-Butyl, ein substituierter oder unsubstituierter Alkenylrest mit 1 bis 20 C-Atomen, bevorzugt Methylen, Butylen, Propylen, Butylen, substituierter oder unsubstituierter Aromat mit 6 C-Atomen bis 10 C-Atomen, wobei zwei kondensierte Aromaten ebenfalls möglich ist, Etherverbindungen oder Esterverbindungen.

Gemäß einer weiteren bevorzugten Ausführungsform liegen Polymer A und Polymer B in der erfindungsgemäßen härtbaren Zusammensetzung in einem Verhältnis von 1:0,01 bis 1:5 in der Gesamtzusammensetzung vor.

Ein weiterer Gegenstand der vorliegenden Erfindung ist eine härtbare Zusammensetzung erhältlich durch Umsetzung von mindestens einer isocyanat-reaktiven Verbindung mit mindestens einer ersten isocyanathaltigen Silanverbindung und mit mindestens einer zweiten isocyanthaltigen Verbindung, wobei das Reaktionsprodukt mindestens zwei polymere Verbindungen, Polymer A und Polymer B umfasst, die jeweils mindestens eine reaktive Silylgruppe aufweisen.

Vorzugsweise ist hierbei das Polymer A verschieden vom Polymer B, insbesondere ist die Zahl der reaktiven Silylgruppen im Polymer A vorzugsweise größer als die Zahl der reaktiven Silylgruppen im Polymer B.

Das Polymer A in der erfindungsgemäßen härtbaren Zusammensetzung ist vorzugsweise eine Verbindung der allgemeinen Formel (I)

(X₃)(X₂)(X₁)Si-T-Z-[Y]-Z'-T'-Si(X₁')(X₂')(X₃') (I)

wobei X₁, X₂, X₃, X₁', X₂', X₃' unabhängig voneinander ein Halogenatom, eine Amino, Mercapto- oder Alkenyloxygruppe, ein Alkylrest mit 1 bis 40 C-Atomen oder ein Rest OR' darstellen kann, wobei R' ein Alkylrest mit 1 bis 40 C-Atomen oder ein Acylrest mit 1 bis 40 C-Atomen ist,
T und T unabhängig voneinander ein geradkettiger oder verzweigter, substituierter oder unsubstituierter Alkylenrest mit 1 bis 20 C-Atomen sind,
Z und Z' eine Carbamatgruppe sind,
[Y] ein organisches Grundgerüst ist.

Bevorzugt sind X₁, X₂, X₃, X₁', X₂', X₃' hierbei Alkylreste mit 1 bis 40 C-Atomen, insbesondere 1 bis 4 C-Atomen, vorzugsweise Methyl, Ethyl, Propyl, Butyl oder ein Rest OR' wobei R¹ insbesondere ein Alkylrest mit bevorzugt 1 bis 4 C-Atomen, bevorzugt Methyl, Ethyl, Propyl, Butyl oder ein Acylrest mit bevorzugt 1 bis 4 C-Atomen ist.
T und T' sind unabhängig voneinander bevorzugt geradkettige oder verzweigte, substituierte oder unsubstituierte Alkylenreste mit 1 bis 8 C-Atomen, insbesondere ein Methylen-, Ethylen-, Propylen-oder Butylen-Rest. T und T' können gleich (T = T') oder verschieden (T ≠ T') voneinander sein.

Das Polymer A enthält mindestens eine reaktive Silylgruppe. Das bedeutet, dass mindestens einer der Reste X₁, X₂, X₃, X₁', X₂' oder X₃' in der allgemeinen Formel (I) einen hydrolysierbaren Rest darstellt. Besonders bevorzugt handelt es sich dabei um eine Alkoxygruppe, d.h. einen Rest OR¹, wobei R¹ ein Alkylrest mit 1 bis 40 C-Atomen, insbesondere 1 bis 4 C-Atomen, ist.

Das Polymer B in der erfindungsgemäßen härtbaren Zusammensetzung ist vorzugsweise eine Verbindung der allgemeinen Formel (II)

(X₃)(X₂)(X₁)Si-T-Z-[Y]-G-R² (II)

wobei X₁, X₂, X₃ unabhängig voneinander ein Halogenatom, eine Amino, Mercapto- oder Alkenyloxygruppe, ein Alkylrest mit 1 bis 40 C-Atomen oder ein Rest OR' darstellen kann, wobei R¹ ein Alkylrest mit 1 bis 40 C-Atomen oder ein Acylrest mit 1 bis 40 C-Atomen ist,
T ein geradkettiger oder verzweigter, substituierter oder unsubstituierter Alkylenrest mit 1 bis 20 C-Atomen,
Z eine Carbamatgruppe,
[Y] ein organisches Grundgerüst,
G eine Carbamatgruppe oder eine Gruppe - E - D - E'-,
   E eine Carbamat-, Carboxy-, Carbonat- oder Sulfonatgruppe oder ein Sauerstoffatom,
   E' eine Carbamat-, Carboxy-, Carbonat- Sulfonat- oder Harnstoffgruppe oder ein Sauerstoffatom,
   D ein geradkettiger oder verzweigter, substituierter oder unsubstituierter Alkylen-, Acylen- oder
   Arylenrest mit 1 bis 40 C-Atomen, bevorzugt Methylen, Ethylen, Propylen oder Butylen, ist,
R² ein geradkettiger oder verzweigter, substituierter oder unsubstituierter Alkyl-, Acyl- oder Arylrest mit 1 bis 40 C-Atomen oder eine Silylgruppe ist, welche nicht zur Ausbildung von Siloxanbindung befähigt ist.

Bevorzugt sind X₁, X₂, X₃ Alkylreste mit 1 bis 40 C-Atomen, insbesondere 1 bis 4 C-Atomen oder ein Rest OR¹ wobei R¹ insbesondere ein Alkylrest mit bevorzugt 1 bis 4 C-Atomen oder ein Acylenrest mit bevorzugt 1 bis 4 C-Atomen.
T ist bevorzugt ein geradkettiger oder verzweigter, substituierter oder unsubstituierter Alkylenrest mit 1 bis 8 C-Atomen, insbesondere Methylen, Ethylen, Propylen oder Butylen.

Bevorzugte Alkylreste R² sind insbesondere substituierte oder unsubstituierte
-CH₃ (Methyl), -CH₂-CH₃ (Ethyl), -CH₂-CH₂- CH₃ (Propyl), -CH₂-CH₂-CH₂- CH₃ (Butyl), -CH₂-CH₂-CH₂-CH₂- CH₃ (Hexyl), -CH₂-CH₂-CH₂-CH₂-CH₂- CH₃ (Heptyl), -CH₂-CH₂-CH₂-CH₂-CH₂-CH₂-CH₂- CH₃ (Octyl), aber auch die verzweigten Derivate davon, wie iso-Propyl, tert-Butyl.

Das Polymer B enthält mindestens eine reaktive Silylgruppe. Das bedeutet, dass mindestens einer der Reste X₁, X₂ oder X₃, in der allgemeinen Formel (II) einen hydrolysierbaren Rest darstellt. Besonders bevorzugt handelt es sich dabei um eine Alkoxygruppe, d.h. einen Rest OR¹, wobei R¹ ein Alkylrest mit 1 bis 40 C-Atomen, insbesondere 1 bis 4 C-Atomen, ist.

Das Verhältnis von isocyanat-reaktiver Verbindung zu isocyanathaltigen Verbindung beträgt vorzugsweise 3:2 bis 2:3, besonders bevorzugt 2:1,5 bis 1,5:2, ganz besonders bevorzugt 1,5:1 bis 1:1,5.

Bevorzugt wird das Verhältnis der Reaktanden so ausgewählt, dass das Verhältnis von NCO-Gruppe zur isocyanat-reaktiven Gruppe, welches bevorzugt eine OH-Gruppe ist, von 1,5:1 bis 1:1,5 beträgt, bevorzugt 1,2:1 bis 1:1,2, ganz besonders bevorzugt 1,2:1.

Isocyanat-reaktive Verbindungen im Rahmen der vorliegenden Erfindung sind Verbindungen, die ein organisches Grundgerüst aufweisen, welches mindestens eine isocyanat-reaktive Gruppe trägt, die vorzugsweise eine Hydroxygruppe ist.
Diese organischen Grundgerüste sind vorzugsweise die gleichen beschriebenen organischen Grundgerüste [Y] wie in Formel (I) und (II).

Geeignete organische Grundgerüste, die Hydroxygruppen als isocyanat-reaktive Gruppen, vorzugsweise als Endgruppen tragen können, umfassen polymere Verbindungen, wie Alkydharze, ölmodifizierte Alkydharze, ungesättigte Polyester, natürliche Öle, z. B. Leinöl, Tungöl, Sojabohnenöl, sowie Epoxide, Polyamide, thermoplastische Polyester wie z. B. Polyethylenterephthalat und Polybutylenterephthalat, Polycarbonate, Polyalkylene, Polyethylene, Polybutylene, Polystyrole, Polypropylen, Ethylenpropylenco- und Terpolymere, Acrylate, z. B. Homo- und Copolymere von Acrylsäure, Acrylaten, Methacrylaten, Acrylamiden, ihren Salzen und dergleichen, Phenolharze, Polyoxymethylenhomo- und -copolymere, Polyurethane, Polysulfone, Polyoxyalkylene, Polysulfidkautschuke, Nitrocellulose, Vinylbutyrate, Vinylpolymere, z. B. Vinylchlorid und/oder Vinylacetat enthaltende Polymere, Ethylcellulose, Celluloseacetate und -butyrate, Reyon, Schellack, Wachse, Ethylencopolymere wie z. B. Ethylenvinylacetatcopolymere, Ethylenacrylsäurecopolymere, Ethylenacrylatcopolymere, organische Kautschuke, Silikonharze und dergleichen. Weitere Beispiele schließen Polyether wie Polyethylenoxid, Polypropylenoxid, Polypropylenglycol und Polytetrahydrofuran, Polyol, Poly(meth)acrylat, Polyvinylalkohol ein.
Bevorzugte organische Grundgerüste sind Polyether, Polyester, Polyurethane und Polyole. In einer besonders bevorzugten Form handelt es sich bei dem organischen Grundgerüst um ein Polyoxyalkylenpolymer, welches durch eine ringöffnende Polymerisation einer Oxyalkylenverbindung durch Double-Metal-Cyanide Katalyse hergestellt wurde.
Die genannten organischen Grundgerüste weisen als Endgruppe mindestens eine, bevorzugt mehrere Hydroxygruppen als isocyanat-reaktive Gruppen auf.
Vorzugsweise sind organische Grundgerüste Polymere Verbindungen oder Mischungen daraus, Co-Polymere sind mit eingeschossen.

In einer bevorzugten Ausführungsform weist ein solches organisches Grundgerüst, welches mindestens eine isocyanat-reaktive Gruppe trägt, eine durchschnittliche OH- Funktionalität (durchschnittliche Zahl der OH-Gruppen pro organisches Grundgerüst) von mindestens etwa 1,6 bis etwa 3,0, bevorzugt mindestens etwa 1,7 bis etwa 2,2, besonders bevorzugt mindestens etwa 1.8 bis etwa 2.0 auf, insbesondere bevorzugt mindestens etwa 1.9 bis etwa 2.0.
Hierbei beträgt beispielsweise die OH-Funktionalität eines Polyethers besonders bevorzugt mindestens etwa 1.93 bis etwa 2.0, ganz besonders bevorzugt etwa 1.95 oder etwa 1.98 bis etwa 2.0.

Unter isocyanathaltige Silanverbindungen im Rahmen der vorliegenden Erfindung sind Verbindungen gemäß Formel (VII), die mindestens eine reaktive Silylgruppe gemäß dem Silizium-Strukturelement Formel (III) und mindestens eine Isocyanatgruppe (-N=C=O) aufweisen, zu verstehen,

(X₃)(X₂)(X₁)Si-T-N=C=O (VII),

wobei X₁, X₂, X₃ und T dieselbe Bedeutung wie oben besitzen. Bevorzugt ist T hierbei ein Alkylrest ausgewählt aus
-CH₂- (Methylen), -CH₂-CH₂- (Ethylen), -CH₂-CH₂-CH₂- (Propylen), -CH₂-CH₂-CH₂-CH₂- (Butylen), - CH₂-CH₂-CH₂-CH₂-CH₂- (Hexylen), -CH₂-CH₂-CH₂-CH₂-CH₂-CH₂- (Heptylen), -CH₂-CH₂-CH₂-CH₂-CH₂-CH₂-CH₂-CH₂- (Octylen), aber auch die verzweigten Derivate davon, wie iso-Propylen, tert-Butylen. Ganz besonders bevorzugt ist T -CH₂- (Methylen), -CH₂-CH₂- (Ethylen) -CH₂-CH₂-CH₂- (Propylen). Geeignete isocyanathaltige Silanverbindungen sind vorzugsweise Methyldimethoxysilylmethylisocyanat, Trimethoxysilylmethylisocyanat, Diethylmethoxysilylmethylisocyanat, Ethyldimethoxysilylmethylisocyanat, Methyldiethoxysilylmethylisocyanat, Triethoxysilylmethylisocyanat, Ethyldiethoxysilylmethylisocyanat, Methyldimethoxysilylethylisocyanat, Trimethoxysilylethylisocyanat, Ethyldimethoxysilylethylisocyanat, Methyldiethoxysilylethylisocyanat, Triethoxysilylethylisocyanat, Ethyldiethoxysilylethylisocyanat, Methyldimethoxysilylpropylisocyanat, Trimethoxysilylpropylisocyanat, Ethyldimethoxysilylpropylisocyanat, Methyldiethoxysilylpropylisocyanat, Triethoxysilylpropylisocyanat, Ethyldiethoxysilylpropylisocyanat, Methyldimethoxysilylbutylisocyanat, Trimethoxysilylbutylisocyanat, Triethylsilylbutylisocyanat, Diethylmethoxysilylbutylisocyanat, Ethyldimethoxysilylbutylisocyanat, Methyldiethoxysilylbutylisocyanat, Triethoxysilylbutylisocyanat, Diethylethoxysilylbutylisocyanat, Ethyldiethoxysilylbutylisocyanat, Methyldimethoxysilylpentylisocyanat, Trimethoxysilylpentylisocyanat, Triethylsilylpentylisocyanat, Ethyldimethoxysilylpentylisocyanat, Methyldiethoxysilylpentylisocyanat, Triethoxysilylpentylisocyanat, Diethylethoxysilylpentylisocyanat, Ethyldiethoxysilylpentylisocyanat, Methyldimethoxysilylhexylisocyanat, Trimethoxysilylhexylisocyanat, Ethyldimethoxysilylhexylisocyanat, Methyldiethoxysilylhexylisocyanat, Triethoxysilylhexylisocyanat, Ethyldiethoxysilylhexylisocyanat, γ-Trimethoxysiloxydimethylsilylpropylisocyanat, γ-Trimethylsiloxydimethoxysilylpropylisocyanat, γ-Triethoxysiloxydiethylpropylisocyanat, γ-Triethoxysiloxydiethoxysilylpropylisocyanat, oder Gemische aus zwei oder mehr davon.

Unter Isocyanathaltige Verbindungen im Rahmen der vorliegenden Erfindung sind Verbindungen gemäß Formel (VIII), die mindestens eine Isocyanatgruppe (-N=C=O), jedoch keine Silylgruppe im Molekül aufweisen, zu verstehen,

R⁵-N=C=O (VIII),

R⁵ kann dabei alle denkbaren Reste darstellen, vorzugsweise ein substituierter oder unsubstituierter, cyclischer oder nicht cyclischer Alkylrest mit 1 bis 40 C-Atomen, substituierter oder unsubstituierter Alkenylrest mit 1 bis 40 C-Atomen, bevorzugt, substituierter oder unsubstituierter Aromat mit 6 C-Atomen bis 10 C-Atomen, wobei zwei kondensierte Aromaten ebenfalls möglich ist, Etherverbindungen oder Esterverbindungen.
Geeignete Isocyanathaltige Verbindungen im Rahmen der vorliegenden Erfindung sind vorzugsweise n-Butylisocyanat, Phenylisocyanat" 4-Isopropylphenylisocyanat, p-Tolylisocyanat, 3-Chlor-4-Methylphenylisocyanat, 4-Trifluormethoxyphenylisocyanat, Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylenethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- ode - 2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

In einer bevorzugten Ausführungsform ist das Polymer A in der erfindungsgemäßen härtbaren Zusammensetzung eine Verbindung der allgemeinen Formel (IX)

[Y]-[Z-T-Si(X₁)(X₂)(X₃)]_{q} (IX)

wobei Y, X₁, X₂, X₃, T und Z dieselbe Bedeutung besitzen wie oben beschrieben und q eine Zahl von 2 bis 20 sein kann. Bevorzugt ist q so gewählt, dass Polymer A eine sternförmige Verbindung darstellt, wobei die Enden mit reaktiven Silylgruppen (-Si(X₁)(X₂)(X₃)) terminiert sind, die durch Ausbildung von Siloxanbindungen vernetzen können. Bevorzugt ist q daher 3, 4, 5, 6 oder 7, ganz besonders bevorzugt 3, 4 oder 5.

In einer bevorzugten Ausführungsform beträgt das mittlere Molekulargewicht M_{w} des organischen Grundgerüsts [Y] in Formel (I), (II) und / oder (IX) von 3000 bis 50000 g/mol, bevorzugt 5000 bis 20000 oder 25000 g/mol, bevorzugt 4000 bis 18000 g/mol, ganz besonders bevorzugt 10000 bis 18000 g/mol, insbesondere 12000 bis 18000 g/mol und 15000 bis 18000 g/mol. Besonders bevorzugt sind auch mittlere Molekulargewichte von 8000 bis 19000 g/mol..

Diese Molekulargewichte sind besonders vorteilhaft, da Zusammensetzungen mit diesen Molekulargewichten Viskositäten aufweisen, die eine leichte Verarbeitbarkeit ermöglichen. Es ist auch denkbar, Polymere mit einem höheren Molekulargewicht einzusetzen. Ist wegen eines beispielsweise hohen Molekulargewichts oder starker innerer Bindungskräfte die Viskosität der erfindungsgemäßen Zusammensetzung höher als gewünscht, kann man die Verarbeitungsviskosität über die Zugabe von Reaktivverdünnern oder Weichmachern einstellen und so eine Zubereitung herstellen, die die gewünschten Eigenschaften aufweist.

Das gewichtsmittlere Molekulargewicht M_{w} kann durch Gelpermationschromatographie (GPC, auch: SEC) bestimmt werden. Dieses Verfahren ist dem Fachmann bekannt.

In einer weiteren bevorzugten Ausführungsform weist das organische Grundgerüst (Y) in den erfindungsgemäßen härtbaren Zusammensetzungen vorzugsweise ein mittleres Molekulargewicht (M_{w}) von mindestens 4000 und eine Polydispersität PD (M_{w}/Mₙ) von weniger als 4,8, bevorzugt weniger als 1,7 auf.
Bevorzugt beträgt die Polydispersität PD jedoch weniger als 1,7, insbesondere weniger als 1,5. Besonders bevorzugt ist es, wenn die PD weniger als etwa 1,45 und besonders bevorzugt weniger als etwa 1,4 beträgt.

Besonders vorteilhafte viskoelastische Eigenschaften lassen sich erreichen, wenn man als polymere Grundgerüste hochmolekulare Polyoxyalkylenpolymere, welche eine enge Molmassenverteilung und damit niedrige Polydispersität besitzen, einsetzt. Solche Polyoxyalkylenpolymere sind vorteilhaft durch so genannte Double-Metal-Cyanide-Katalyse oder durch Katalyse mit Caesiumhdroxid oder Phosphazenverbindungen bzw. -salzen herstellbar. So hergestellte Polyoxyalkylenpolymere zeichnen sich durch eine besonders enge Molmassenverteilung, durch eine besonders hohe mittlere Molmasse und durch eine sehr niedrige Zahl an Doppelbindungen an den Enden der Polymerketten aus.
Solche Polyoxyalkylenpolymere haben eine Polydispersität PD (Mw/Mn) von höchstens 1,7. Besonders bevorzugt organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.
In einer bevorzugten Ausführungsform der Erfindung weisen diese Polyether ein mittleres Molekulargewicht (M_{w}) von etwa 5 000 bis etwa 30 000 auf, insbesondere etwa 6000 bis etwa 25 000. Besonders bevorzugt sind Polyether mit mittleren Molekulargewichten von etwa 10 000 bis etwa 22 000, insbesondere mit mittleren Molekulargewichten von etwa 12 000 bis etwa 18 000.

In einer weiteren bevorzugten Ausführungsform weist das organische Grundgerüst (Y) eine oder mehrere Silylgruppen auf, die jedoch nicht zur Ausbildung von Siloxanbindungen befähigt sind und somit nicht zur Vernetzung beitragen.

In einer weiteren bevorzugten Ausführungsform enthält Polymer A in den erfindungemäßen härtbaren Zusammensetzungen vorzugsweise im Mittel mindestens mehr als 1,0, insbesondere mehr als 1,2, bevorzugt mehr als 1,5, ganz besonders bevorzugt mehr als 1,8 reaktive Silylgruppen im Molekül. Gemäß einer bevorzugten Ausführungsform enthält das Polymer A in den erfindungemäßen härtbaren Zusammensetzungen im Mittel mindestens mehr als 1,8 reaktive Silylgruppen im Molekül. Besonders bevorzugt mindestens etwa 1.93 bis etwa 2.0, ganz besonders bevorzugt etwa 1.95 oder etwa 1.98 bis etwa 2.0.

In einer weiteren bevorzugten Ausführungsform enthält Polymer B in den erfindungemäßen härtbaren Zusammensetzungen vorzugsweise im Mittel 1,0 bis 1,8 reaktive Silylgruppen im Molekül, bevorzugt 1,2 bis 1,8.

In einer weiteren bevorzugten Ausführungsform der vorliegenden Erfindung weist das Polymer A im Mittel 0,4 bis 6 Gewichtsprozent% (Gew%) reaktive Silylgruppen, bezogen auf die Gesamtmenge des Polymers, auf.
Bevorzugt weist Polymer A mindestens 0,55 Gew %, insbesondere mindestens 0,65% Gew, etwa 0,9 bis 6 Gew%, besonders bevorzugt etwa 1,1 bis 6 Gew %, insbesondere etwa 1,3 bis 5,85 Gew % reaktive Silylgruppen im Molekül auf.

In einer weiteren bevorzugten Ausführungsform der vorliegenden Erfindung weist das Polymer B im Mittel 0,4 bis 4 Gew % reaktive Silylgruppen, bezogen auf die Gesamtmenge des Polymers, auf. Bevorzugt weist Polymer B mindestens 0,55 Gew %, insbesondere 0,65 Gew %, inbesondere etwa 0,65 bis 4 Gew %, besonders bevorzugt etwa 1 bis 3,95 Gew %, ganz besonders bevorzugt etwa 1,1 bis 2,92 Gew % reaktive Silylgruppen im Molekül auf.

In einer weiteren bevorzugten Ausführungsform weisen die vorliegenden härtbaren Zusammensetzungen eine Viskosität von weniger als 150 000 mPas, bevorzugt weniger als 100 000 mPas auf. Vorteilhafterweise weisen die vorliegenden härtbaren Zusammensetzungen sogar eine Viskosität von weniger als 20 000 mPas auf, insbesondere etwa 1000 bis 10000, bevorzugt 3 000 bis 6 000 mPas (Brookfield RVT, 23°C, Spindel 7,2,5 U/min).

In einer weiteren bevorzugten Ausführungsform weisen Polymer A und Polymer B der erfindungsgemäßen vorliegenden härtbaren Zusammensetzungen das gleiche organische Grundgerüst (Y) auf.

In einer weiteren bevorzugten Ausführungsform ist Z und Z' in Formel (I) und / oder (II) eine Carbamatgruppe (IV).
Carbamatgruppen an dieser Position im Polymer A und / oder Polymer B verbessern insbesondere die viskoelastischen bzw. plastischen Eigenschaften der ausgehärteten Zusammensetzungen sowie die Verarbeitbarkeit der härtbaren Zusammensetzungen.
Sind Beispielsweise Harnstoffgruppen statt Carbamatgruppen an dieser Position, zeigen die Zusammensetzungen oftmals schlechtere Materialeigenschaften. Harnstoffgruppen sind so genannte "harte Segmente", die bei vielen Materialien zu einer Verschlechterung der viskoelastischen Eigenschaften führen.
Beispielsweise verschlechtert sich zumeist die Verarbeitbarkeit, da die Viskosität erhöht wird. Aber auch das erhaltene Material wird durch die Harnstoffgruppe in einem Polymer A bzw. Polymer B verhärtet und spröder und verliert seine Rückstellkraft. Ebenso ist ein solches Material zumeist bei tiefen Temperaturen nicht ausreichend stabil.

In einer weiteren bevorzugten Ausführungsform enthalten die erfindungsgemäßen härtbaren Zusammensetzungen ein weiteres Polymer C gemäß der allgemeinen Formel (X)

R²-Z-[Y]-Z'-R² (X)

wobei Z und Z' unabhängig voneinander eine Carbamat-, Carboxy-, Carbonat- oder Sulfonatgruppe oder ein Sauerstoffatom,
[Y] ein organisches Grundgerüst,
R² ein geradkettiger oder verzweigter, substituierter oder unsubstituierter Alkyl-, Acyl- oder Arylrest mit 1 bis 40 C-Atomen oder eine Silylgruppe, welche nicht zur Ausbildung von Siloxanbindung befähigt ist,

Ein weiterer Gegenstand der vorliegenden Erfindung sind Zubereitungen, enthaltend die erfindungsgemäßen härtbaren Zusammensetzungen.
Es sind insbesondere Zubereitungen, die härtbare Zusammensetzungen, umfassend (i) mindestens ein Polymer A mit mindestens einer reaktiven Silylgruppe und (ii) mindestens ein Polymer B mit mindestens einer reaktiven Silylgruppe, wobei die Zahl der reaktiven Silylgruppen in (i) größer oder gleich der Zahl der Silylgruppen in (ii) ist und die reaktiven Silylgruppen unter Ausbildung von Siloxanbindungen vernetzen.
Ebenfalls sind es Zubereitungen, die härtbare Zusammensetzung erhältlich durch Umsetzung von mindestens einer isocyanat-reaktiven Verbindung mit mindestens einer ersten isocyanathaltigen Silanverbindung und mit mindestens einer zweiten isocyanthaltigen Verbindung, wobei das Reaktionsprodukt mindestens zwei polymere Verbindungen A und B umfasst, die jeweils mindestens eine reaktive Silylgruppe aufweisen.

Insbesondere sind dabei Zubereitungen bevorzugt, in denen Z und Z' im Polymer A(Formel (I)) und / oder Polymer B (Formel (II)) eine Carbamatgruppe darstellen.

Die erfindungsgemäßen Zubereitungen können weitere, dem Fachmann bekannte, Inhaltsstoffe für Kleb-, Dicht-, und Beschichtungsstoffe enthalten.
So können die Zubereitungen Verbindungen ausgewählt aus der Gruppe bestehend aus Weichmachern, Feuchtigkeits-Stabilisatoren, Antioxidantien, Katalysatoren, Härtern, Füllstoffen, Reaktivverdünnern, Trockenmitteln, Haftvermittlern, UV-Stabilisatoren, rheologische Hilfsmitteln und / oder Lösungsmittel enthalten.

Die erfindungsgemäße härtbaren Zusammensetzungen, die mindestens ein Polymer A und ein Polymer B enthalten, welche jeweils mindestens eine Silylgruppe aufweisen, können bereits in der bislang beschriebenen Form im Rahmen der erfindungsgemäßen Einsatzvorschläge zu ihrem endgültigen Einsatz kommen. In der Regel ist es jedoch vorteilhaft, wenn die erfindungsgemäße Zusammensetzungen in einer Zubereitung zum Einsatz kommt, die weitere zusätzliche Inhaltsstoffe, beispielsweise zur Regulierung der Viskosität oder der Materialeigenschaften, enthalten.

Demgemäß ist ein weiterer Gegenstand der vorliegenden Erfindung eine Zubereitungen, enthaltend die erfindungsgemäßen härtbaren Zusammensetzungen.
Vorzugsweise enthält eine solche Zubereitung zusätzlich eine oder mehrere Verbindungen ausgewählt aus der Gruppe umfassend Weichmacher, Stabilisatoren, Antioxidantien, Katalysatoren, Füllstoffe, Reaktivverdünner, Trockenmittel, Haftvermittler und UV-Stabilisatoren, rheologische Hilfsmittel, Farbstoffe, Wasserfänger, Alterungsinhibitoren, Verdicker.
Weitere Additive, wie Lösungsmittel, Schmiermittel, Schäumungsmittel können bei Bedarf ebenfalls in die Zubereitungen einformuliert werden

Es ist beispielsweise möglich, dass die Viskosität der erfindungsgemäßen härtbaren Zusammensetzung für bestimmte Anwendungen zu hoch ist. Es wurde jedoch gefunden, dass sich die Viskosität der erfindungsgemäßen Zusammensetzung in der Regel durch Verwendung eines "Reaktivverdünners" auf einfache und zweckmäßige Weise verringern lässt, ohne dass die Materialeigenschaften der ausgehärteten Zusammensetzung wesentlich darunter leiden, beispielsweise durch Entmischungserscheinungen (z.B. Weichmacherwanderung) in der ausgehärteten Masse.

Als Reaktivverdünner eignet sich beispielsweise ein Polyurethan mit mindestens einer gegenüber Wasser reaktiven Endgruppe, insbesondere einer NCO-Gruppe oder einer Alkoxysilangruppe, oder beidem, dessen Molekulargewicht (M_{w}) höchstens 10 000 beträgt.
Vorzugsweise weist der Reaktivverdünner mindestens eine funktionelle Gruppe auf, die unter Feuchtigkeitseinfluss in der Lage ist mit einer reaktiven Gruppe der erfindungsgemäßen härtbaren Zusammensetzung unter Kettenverlängerung bzw. Vernetzung zu reagieren (Reaktivverdünner). Bei der mindestens einen funktionellen Gruppe kann es sich um jede unter Feuchtigkeitseinfluss mit Vernetzung oder Kettenverlängerung reagierende funktionelle Gruppe handeln.

Als Reaktivverdünner eignen sich alle polymeren Verbindungen, die die Materialeigenschaften des nach Aushärtung oder Vernetzung entstehenden Produkts weitgehend unbeeinflusst lassen, oder zumindest nicht so nachteilig beeinflussen, dass die Unbrauchbarkeit des Produkts daraus resultiert. Geeignet sind beispielsweise Polyester, Polyether, Polymerisate von Verbindungen mit olefinisch ungesättigter Doppelbindung oder Polyurethane, sofern die oben genannten Voraussetzungen erfüllt werden.

Vorzugsweise handelt es sich bei den Reaktivverdünnern jedoch um Polyurethane mit wenigstens einer Alkoxysilangruppe als reaktive Gruppe.

Die Reaktivverdünner können ein oder mehrere funktionelle Gruppen aufweisen, bevorzugt liegt die Zahl der funktionellen Gruppen jedoch bei 1 bis etwa 6, insbesondere bei etwa 2 bis etwa 4, beispielsweise etwa 3.
Die Viskosität der Reaktivverdünner beträgt in einer bevorzugten Ausführungsform weniger als etwa 20 000 mPas, insbesondere etwa 1 000 bis etwa 10 000, beispielsweise etwa 3 000 bis etwa 6 000 mPas (Brookfield RVT, 23°C, Spindel 7, 2,5 U/min). Besonders bevorzugt sind etwa 0,1 - 6.000 mPas, ganz besonders bevorzugt 1- 1000 mPas.

Die im Rahmen des erfindungsgemäßen Verfahrens einsetzbaren Reaktivverdünner können eine beliebige Molekulargewichtsverteilung (PD) aufweisen, und sind demnach nach den üblichen Methoden der Polymerchemie herstellbar.

Vorzugsweise werden als Reaktivverdünner Polyurethane eingesetzt, die aus einer Polyolkomponente und einer Isocyanatkomponente und anschließender Funktionalisierung mit einer oder mehreren Alkoxysilylgruppen hergestellt werden können.

Der Begriff "Polyolkomponente" umfasst dabei im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h., eine Verbindung mit mehr als einer OH-Gruppe im Molekül.

Als Polyolkomponente zur Herstellung der Reaktivverdünner kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol und dergleichen polyfunktionelle Alkohole.

Ebenfalls zum Einsatz als Polyolkomponente geeignet sind Polyether, die durch Vinylpolymere modifiziert wurden. Derartige Produkte sind beispielsweise erhältlich, indem Styrol- und/oder Acrylnitril in der Gegenwart von Polyethern polymerisiert werden.

Ebenfalls als Polyolkomponente für die Herstellung des Reaktivverdünners geeignet, sind Polyesterpolyole mit einem Molekulargewicht von etwa 200 bis etwa 5 000. So können beispielsweise Polyesterpolyole verwendet werden, die durch die bereits oben beschriebene Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind, wie bereits genannt, 1,4-Hydroxymethylcyclohexan, 2-Methyl-1,3-propandiol, Butandiol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind, wie bereits oben beschrieben, durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren und Tricarbonsäuren sowie geeignete Alkohole wurden bereits oben genannt.

Im Rahmen der vorliegenden Erfindung besonders bevorzugt als Polyolkomponente zur Herstellung der Reaktivverdünner eingesetzte Polyole sind beispielsweise Dipropylenglykol und/oder Polypropylenglykol mit einem Molekulargewicht von etwa 400 bis etwa 2500, sowie Polyesterpolyole, bevorzugt Polyesterpolyole erhältlich durch Polykondensation von Hexandiol, Ethylenglykol, Diethylenglykol oder Neopentylglykol oder Gemischen aus zwei oder mehr davon und Isophthalsäure oder Adipinsäure, oder deren Gemische.

Ebenfalls als Polyolkomponente zur Herstellung der Reaktivverdünner geeignet sind Polyacetale. Unter Polyacetalen werden Verbindungen verstanden, wie sie aus Glykolen, beispielsweise Diethylenglykol oder Hexandiol mit Formaldehyd erhältlich sind. Im Rahmen der Erfindung einsetzbare Polyacetale können ebenfalls durch die Polymerisation cyclischer Acetale erhalten werden.

Weiterhin als Polyole zur Herstellung der Reaktivverdünner geeignet sind Polycarbonate. Polycarbonate können beispielsweise durch die Reaktion von Diolen wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente zur Herstellung der Reaktivverdünner geeignet, sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxy-propylacrylat, 2-Hydroxypropylmethacrylat, 3-Hydroxypropylacrylat oder 3-Hydroxypropyhnethacrylat oder Gemische aus zwei oder mehr davon.

Zur Herstellung der erfindungsgemäß bevorzugten Reaktivverdünner wird die entsprechende Polyolkomponente jeweils mit einem mindestens difunktionellen Isocyanat umgesetzt. Als mindestens difunktionelles Isocyanat (Polyisocyanat) kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen, bevorzugt.

Vorzugsweise weist die im Rahmen der vorliegenden Erfindung als Reaktivverdünner vorliegende Verbindung mindestens eine Alkoxysilangruppe auf, wobei unter den Alkoxysilangruppen die Di- und Trialkoxysilangruppen bevorzugt sind.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder - 2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso kann man als Polyisocyanate sind drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Weiterhin kann man als Reaktivverdünner z.B. folgende Stoffe einsetzen: mit Isocyanatosilanen umgesetzte Polyalkylenglykole, Carbamatopropyltrimethoxysilan, Alkyltrimethoxysilan, Alkyltriethoxysilan, wie Methyltrimethoxysilan, Methyltriethoxysilan sowie Vinyltrimethoxysilan, Vinyltriethoxysilan, Phenyltrimethoxysilan, Phenyltriethoxysilan, Octyltrimethoxysilan, Tetraethoxysilan, Vinyldimethoxymethylsilan, Vinyltriethoxysilan, Vinyltriacetoxysilan, Isooctyltrimethoxysilan, Isooctyltriethoxysilan, N-Trimethoxysilylmethyl-O-methylcarbamat, N-Dimethoxy(methyl)silylmethyl-O-methyl-carbamat, Hexadecyltrimethoxysilan, 3-Octanoylthio-1-propyltriethoxysilan und Teilhydrolysate dieser Verbindungen.

Zur Reduzierung der Viskosität der erfindungsgemäßen Zusammensetzung lässt sich neben oder anstatt eines Reaktivverdünners auch ein Weichmacher einsetzen.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, wie Dioctyladipat, Diisodecylsuccinat, Dibutylsebacat oder Butyloleat, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, wie beispielsweise Dioctylphthalat, Dibutylphthalat oder Butylbenzylphthalat, Propionsäure-ester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa.Cognis, Düsseldorf).

Ebenfalls als Weichmacher geeignet sind die reinen oder gemischten Ether monofunktioneller, linearer oder verzweigter C4-16-Alkohole oder Gemische aus zwei oder mehr verschiedenen Ethern solcher Alkohole, beispielsweise Dioctylether.

In einer weiteren bevorzugten Ausführungsform werden als Weichmacher endgruppenverschlossene Polyethylenglykole eingesetzt. Beispielsweise Polyethylen- oder Polypropylenglykoldi-C1-4-alkylether, insbesondere die Dimethyl- oder Diethylether von Diethylenglykol oder Dipropylenglykol, sowie Gemische aus zwei oder mehr davon.

Besonders bevorzugt sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten Herstellen, indem die Stöchiometrie so gewählt wird, daß im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Zur Herstellung der Diurethane auf Basis von Diolen können Diole mit 2 bis etwa 22 C-Atomen eingesetzt werden, beispielsweise Ethylenglykol, Propylenglykol, 1,2-Propandiol, Dibutandiol, Hexandiol, Octandiol oder technische Gemische von Hydroxyfettalkoholen mit etwa 14 C-Atomen, insbesondere Hydroxystearylalkohol. Bevorzugt werden lineare Diolmischungen, insbesondere solche, die Polypropylenglykol mit einem mittleren Molekulargewicht (Mn) von etwa 1.000 bis etwa 6.000 in Mengen über etwa 50 Gew.-%, insbesondere über etwa 70 Gew.-% enthalten. Ganz besonders bevorzugt werden Diurethane ausschließlich auf der Basis von Propylenglykol mit gleichen oder verschiedenen mittleren Molekulargewichten von etwa 1 000 bis etwa 4 000. Die freien OH-Gruppen der Diolmischungen werden im wesentlichen alle mit aromatischen oder aliphatischen Monoisocyanaten oder deren Gemischen abreagiert. Bevorzugte Monoisocyanate sind Phenylisocyanat oder Toluylenisocyanat oder deren Gemische.

Zur Herstellung der Diurethane auf Basis von Diisocyanaten werden aromatische oder aliphatische Diisocyanate oder deren Gemische eingesetzt. Als aromatische oder aliphatische Diisocyanate sind beispielsweise die Isocyanate geeignet, wie sie oben als zur Herstellung des erfindungsgemäßen Polyurethans geeignet angegeben wurden, vorzugsweise Toluylendiisocyanat (TDI). Die freien NCO-Gruppen der Diisocyanate werden im wesentlichen vollständig mit monofunktionellen Alkoholen, vorzugsweise linearen monofunktionellen Alkoholen oder Gemischen aus zwei oder mehr verschiedenen monofunktionellen Alkoholen umgesetzt. Besonders geeignet sind Gemische linearer monofunktioneller Alkohole. Geeignete Monoalkohole sind beispielsweise Monoalkohole mit 1 bis etwa 24 C-Atomen, beispielsweise Methanol, Ethanol, die Stellungsisomeren von Propanol, Butanol, Pentanol, Hexanol, Heptanol, Octanol, Decanol oder Dodecanol, insbesondere die jeweiligen 1-Hydroxy-Verbindungen, sowie Gemische aus zwei oder mehr davon. Ebenfalls geeignet sind sogenannte "technische Gemische" von Alkoholen und endgruppenverschlossene Polyalkylenglykolether. Besonders geeignet sind Alkoholgemische, die Polypropylenglykolmonoalkylether mit einem mittleren Molekulargewicht (Mn) von etwa 200 bis etwa 2 000 in einer Menge von mehr als etwa 50 Gew.-%, vorzugsweise mehr als etwa 70 Gew.-%, bezogen auf die Alkoholmischung, enthalten. Besonders bevorzugt werden Di-urethane auf Basis von Diisocyanaten, deren freie NCO-Gruppen vollständig mittels Polypropylenglykolmonoalkylether mit einem mittleren Molekulargewicht von etwa 500 bis etwa 2.000 umgesetzt worden sind.

Neben Reaktivverdünnern und Weichmachern kann die erfindungsgemäße Zubereitung noch weitere Zusatzstoffe enthalten, die in der Regel zur Modifikation bestimmter Materialeigenschaften der Zubereitung vor oder nach der Verarbeitung dienen oder die Stabilität der Zubereitung vor oder nach der Verarbeitung fördern.

Häufig ist es sinnvoll, die erfindungsgemäßen Zubereitungen gegenüber eindringender Feuchtigkeit zu stabilisieren, um die Lagerbarkeit (shelf-life) zu erhöhen. Eine solche Verbesserung der Lagerbarkeit läßt sich beispielsweise durch den Einsatz von Stabilisatoren erreichen. Als Stabilisatoren eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen.

Als Stabilisatoren eignen sich beispielsweise vorzugsweise Isocyanate oder Silane.
Geeignete Silane sind beispielsweise (Methoxycarbonylaminomethyl)trimethoxysilane, Vinylsilane wie 3-Vinylpropyltriethoxysilan, Vinyltrimethoxysilan, Oximsilane wie Methyl-O,O',O"-butan-2-on-trioximosilan oder O,O',O",O"'-Butan-2-on-tetraoximosilan (CASNr. 022984-54-9 und 034206-40-1) öder Benzamidosilane wie Bis(N-Methylbenzamido)methylethoxysilan (CAsNr. 16230-35-6).

Die Erfindungsgemäße Zubereitung enthält in der Regel etwa 0 bis etwa 6 Gew.-% Stabilisatoren.

Die erfindungsgemäße Zubereitung kann weiterhin bis zu etwa 7 Gew.-%, insbesondere etwa 3 bis etwa 5 Gew.% Antioxidantien enthalten.

Zu den im Rahmen der Erfindung als Zusatzstoffe einsetzbaren Stabilisatoren oder Antioxidantien, zählen gehinderte Phenole hohen Molekulargewichts (M_{w}), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 2,4-dimethyl-6-tert-butylphenol, 2,2'-methylen-bis- (4-methyl-6-tert-butylphenol; 4,4'-butyliden-bis-(3-methyl-6-tert-butylphenol); 4,4'-thiobis(3-methyl-6-tert-butylphenol); 2,6-di-tert-butyl-p-cresol; 6-(4-Hy-droxyphenoxy)-2,4-bis(n-octyl-thioy)-1,3,5-triazin; tetrakis [methylen-3-(3,5-di-tert-butyl-4-hydroxyphenyl)propionate]methan; 1,1,3-tris(2methyl-4-hydroxy-4-tert-butylphenyl)butan; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat]. Als Photostabilisatoren sind beispielsweise diejenigen geeignet, die unter dem Namen Thinuvin® (Hersteller: Ciba Geigy) im Handel erhältlich sind.

Die als Haftvermittler, Trockenmittel und/oder Reaktivverdünner bevorzugten α-Silane sind vorteilhaft aus der Gruppe bestehend aus α-Amino-, α-Methacryl-, α-Carbamatosilanen und α-Alkoxysilanen auswählbar. Geeignete Beispiele sind N-Cyclohexylaminomethylmethyldiethoxysilan, N-Cyclohexylaminomethyltriethoxysilan, N-Phenylaminomethyltriethoxysilan, (Methacryloxymethyl)methyldiethoxysilan und Methacryloxymethyltriethoxysilan, N-(Triethoxysilylmethyl)-O-methyl-carbamat und N-(Methyldiethoxysilylmethyl)-O-methyl-carbamat.

Geeignete Katalysatoren zur Förderung der Vernetzung bzw. zur Steuerung der Härtungsgeschwindigkeit kommen insbesondere aliphatische Monoamine, Diamine, Polyamine sowie heterocyclische Amine und aromatische Amine in Frage, beispielsweise Butylamin, Hexylamin, Octylamin, Decylamin oder Laurylamin, Ethylendiamin, Hexan- bzw. Hexyldiamin, Dibutylamin, Triethanolamin, Triethylendiamin, Trimethylaminoethylpiperazin, Pentamethyldiethylentriamin, Tetramethyliminobisopropylamin und Bis(dimethylaminopropyl)-N-isopropanolamin sowie Dimorpholinodienthylether, Diethylentriamin, Cyclohexylamin, Benzylamin, Diethylaminopropylamin, Xylylendiamin, Guanidin, Diphenylguanidin, Triethylentetramin oder Tetraethylenpentamin, Piperidin oder Piperazin, Methaphenylendiamin, 2,4,6-tris(dimethylaminomethyl)phenol, Morpholin, N-methylmorpholin, 1,3-diazabicyclo[5.4.6]undecene-7 (DBU). Weitere geeignete Katalysatoren sind solche auf Basis von organischen oder anorganischen Schwermetallverbindungen, wie beispielsweise Kobaltnaphthenat, Dibutylzinndilaurat, Zinnmercaptide, Zinndichlorid, Zirkontetraoctoat, Zinnnaphthenat, Zinnstearat, Antimondioctoat, Bleidioctoat, Metall-, insbesondere Eisenacetylacetonat. Insbesondere kommen alle für die Beschleunigung der Silanol-Kondensation bekannten Katalysatoren in Frage. Beispielsweise sind dies Organozinn- Organotitan-, Organozirkon- oder Organoaluminiumverbindungen. Beispiele für derartige Verbindungen sind Dibutylzinndilaurat, Dibutylzinndimaleat, Zinnoctoat, Isopropyltriisostearoyltitanat, Isopropyltris(dioctylpyrophosphat)titanat, Bis(dioctylpyrophosphat)oxyacetattitanat, Tetrabutylzirconat, Tetrakis(acetylacetonato)zirkonium, Tetraisobutylzirkonat, Butoxytris(acetylacetonato)zirkonium, Tris(ethylacetoacetato)aluminium. Dibutylzinnalkylester wie Dibutylzinnalkylmaleate oder Dibutylzinnlaurate sind besonders geeignet, insbesondere Dibutylzinnbisethylmaleat, Dibutylzinnbisbutylmaleat, Dibutylzinnbisoctylmaleat, Dibutylzinnbisoleylmaleat, Dibutylzinnbisacetylacetat, Dibutylzinndiacetat, Dibutylzinndioctoat, Dibutylzinnoxid, Dibutylzinnbistriethoxysilikat und deren katalytisch wirksame Derivate. Die genannten Katalysatoren können alleine oder als Gemisch aus zwei oder mehr der genannten Katalysatoren eingesetzt werden.

Ebenfalls als Katalysatoren geeignet sind Aminoverbindungen, die eine Alkoxysilylgruppe tragen, beispielsweise 3-Aminopropyltromethoxysilan.

Bevorzugte Katalysatoren zur Steuerung der Härtungsgeschwindigkeit der erfindungsgemäßen härtbaren Zusammensetzungen sind beispielsweise metallorganische Verbindungen wie Eisen- oder Zinnverbindungen, insbesondere die 1,3-Dicarbonylverbindungen des Eisens oder des zwei- bzw. vierwertigen Zinns, die Zinn-(II)-carboxylate beziehungsweise die Dialkylzinn-(IV)-Dicarboxylate oder die entsprechenden Dialkoxylate, z.B. Dibutylzinndilaurat, Dibutylzinndiacetat, Dioctylzinndiacetat, Dibutylzinnmaleat, Zinn(II)octoat, Zinn(II)phenolat oder die Acetylacetonate des zwei- bzw. vierwertigen Zinns. Ferner kann man auch Alkyltitanate, Siliziumorganische Titanverbindungen oder Bismutkatalysatoren, wie z.B. Bismut-tris-2-ethylhexanoat, oder saure Verbindungen wie Phosphorsäure, p-Toluolsulfonsäure oder Phthalsäure einsetzen

Ferner eignen sich folgende Zinnverbindungen: Di(n-butyl)zinn(IV)-di(methylmaleat), Di(n-butyl)zinn(IV)-di(butylmaleat), Di(n-octyl)zinn(IV)-di(methylmaleat), Di(n-octyl)zinn(IV)-di(butylmaleat), Di(n-octyl)zinn(IV)-di(iso-octylmaleat), Di(n butyl)zinn(IV)sulfid, Di(n-butyl)zinn(IV)oxid, Di(n-octyl)zinn(IV)oxid, (n Butyl)₂Sn(SCH₂COO), (n-Octyl)₂Sn(SCH₂COO), (n-Octyl)₂Sn(SCH₂CH₂COO), (n-Octyl)₂Sn(SCH₂CH₂COOCH₂CH₂OCOCH₂S), (n Butyl)₂Sn(SCH₂COO-i-C₈H₁₇)₂, (n-Octyl)₂Sn(SCH₂COO-1-C₈H₁₇)₂, (n-Octyl)₂Sn(SCH₂COO-n-C₈H₁₇)₂.

Chelatbildende Zinnorganyle können ebenso eingesetzt werden, z.B. Di(n-butyl)zinn-(IV)-di(acetylacetonat), Di(n-octyl)zinn-(IV)-di(acetylacetonat), (n-octyl)(n-butyl)-zinn-(IV)-di(acetylacetonat).

Als Härtungskatalysatoren kann man ferner Borhalogenide wie Bortrifluorid, Bortrichlorid, Bortribromid, Bortrijodid oder gemischte Borhalogenide einsetzen. Besonders bevorzugt sind Bortrifluoridkomplexe wie z.B. Bortrifluorid-diethyletherat, die als Flüssigkeiten einfacher handhabbar sind als die gasförmigen Borhalogenide.

Ferner können vorzugsweise als Katalysatoren Titan-, Aluminium- und Zirkonverbindungen oder Mischungen aus einem oder mehreren Katalysatoren aus einer oder mehrerer der gerade erwähnten Gruppen eingesetzt werden. Diese Katalysatoren eignen sich als Härtungskatalysatoren für die Alkoxysilanpolymere. Einerseits kann man so den Einsatz von Zinnverbindungen vermeiden, zum anderen kann man so eine bessere Adhäsion zu normalerweise schlecht anhaftenden organischen Oberflächen wie z. B. Acrylaten verbessern. Unter den Titan-, Aluminium- und Zirkonkatalysatoren werden die Titankatalysatoren bevorzugt eingesetzt, da mit ihnen die besten Härtungsergebnisse erzielt werden.

Als Titankatalysatoren eignen sich Verbindungen, die Hydroxygruppen und/oder substituierte oder unsubstituierte Alkoxygruppen aufweisen, also Titanalkoxide der allgemeinen Formel

Ti(OR^{Z})ₐ,

wobei R^{z} eine organische Gruppe, vorzugsweise eine substituierte oder unsubstituierte Kohlenwasserstoffgruppe mit 1 bis 20 C-Atomen und die 4 Alkoxygruppen -OR^{z} gleich oder verschieden sind. Ferner können ein oder mehrere der Reste -OR^{z} durch Acyloxygruppen -OCOR^{z} ersetzt werden.

Ebenso eigenen sich als Titankatalysatoren Titanalkoxide, bei denen ein oder mehrere Alkoxygruppen durch Halogenatome ersetzt sind.

Als Titankatalysatoren kann man z.B. folgende gemischt- oder nicht-gemischt-substituierte Titanalkoxide einsetzen:
Tetramethoxytitan, Tetraethoxytitan, Tetraallyloxytitan, Tetra-n-Propoxytitan, Tetraisopropoxytitan, Tetra-n-butoxytitan, Tetraisobutoxytitan, Tetra-(2-butoxy)titan, Tetra(t-butoxy)titari, Tetrapentoxy(titan), Tetracyclopentoxytitan, Tetrahexoxytitan, Tetracyclohexoxytitan, Tetrabenzoxytitan, Tetraoctoxytitan, Tetrakis(2-ethylhexoxy)-titan, Tetradecoxytitan, Tetradodecoxytitan, Tetrastearoxytitan, Tetrabutoxytitan-Dimer, Tetrakis(8-hydroxyoctoxy)titan, Titandiisopropoxy-bis(2-ethyl-1,3-hexandiolat), Titan- bis(2-ethylhexyloxy)bis(2-ethyl-1,3-hexanediolate), Tetrakis(2-chloroethoxy)titan, Tetrakis(2-bromoethoxy)titan, Tetrakis(2-methoxyethoxy)titan, Tetrakis(2-ethoxyethoxy)titan, Butoxy-Trimethoxytitan, Dibutoxydimethoxytitan, Butoxytriethoxytitan, Dibutoxydiethoxytitan, Butoxytriisopropoxytitan, Dibutoxydiisopropoxytitan, Tetraphenoxybutan, Tetrakis(o-chlorophenoxy)titan, Tetrakis(m-nitrophenoxy)titan, Tetrakis(p-methylphenoxy)titan, Tetrakis(trimethylsiloxy)titan.

Ferner kann man Titanacylate einsetzen: Triisopropoxytitan, Triisopropoxytitanmethacrylat, Diisopropoxytitandimethacrylat, Isopropoxytitantrimethacrylat, Triisopropoxytitanhexanoat, Triisopropoxytitanstearat und ähnliche.

Als halogenierte Titankatalysatoren können z.B. folgende Verbindungen eingesetzt werden: Triisopropoxytitanchlorid, Diisopropoxytitandichlorid, Isopropoxytitantrichlorid, Triisopropoxytitanbromid, Triisopropoxytitanfluorid, Triethoxytitanchlorid, Tributoxytitanchlorid.

Ferner kann man Titanchelatkomplexe einsetzen: Dimethoxytitanbis(ethylacetoacetat), Dimethoxytitanbis(acetylacetonat), Diethoxytitanbis(ethylacetoacetat), Diethoxytitanbis(acetylacetonat), Diisopropoxytitanbis(ethylacetoacetat), Diisopropoxytitanbis(methylacetoacetat), Diisopropoxytitanbis(t-butylacetoacetat), Diisopropoxytitanbis(methyl-3-oxo-4,4-dimethylhexanoat), Diisopropoxytitanbis(ethyl-3-oxo-4,4,4-trifluorobutanoat), Diisopropoxytitanbis(acetylacetonat), Diisopropoxytitanbis(2,2,6,6-tetramethyl-3,5-heptanedionat), Di(n-butoxy)titanbis(ethylacetoacetat), Di(n-butoxy)titanbis(acetylacetonat), Diisobutoxytitanbis(ethylacetoacetat), Diisobutoxytitanbis(acetylacetonat), Di(t-butoxy)titanbis(ethylacetoacetat), Di(t-butoxy)titanbis(acetylacetonat), Di(2-ethylhexoxy)titanbis(ethylacetoacetat), Di(2-ethylhexoxy)titanbis(acetylacetonat), Bis(1-methoxy-2-propoxy)titanbis(ethylacetoacetat), Bis(3-oxo-2-butoxy)-titanbis(ethylacetoacetat), Bis(3-diethylaminopropoxy)titanbis(ethylacetoacetat), Triisopropoxytitan(ethylacetoacetat), Triisopropoxytitan(diethylmalonat), Triisopropoxytitan(allylacetoacetat), Triisopropoxytitan(methacryloxyethylacetoacetat), 1,2-Dioxyethantitanbis(ethylacetoacetat), 1,3-Dioxypropantitanbis(ethylacetoacetat), 2,4-Dioxypentantitanbis(ethylacetoacetat), 2,4-Dimethyl-2,4-Dioxypentantitanbis(ethylacetoacetat), Diisopropoxytitanbis(triethanolaminat), Tetrakis(ethylacetoacetato)titan, Tetrakis(acetylacetonato)titan, Bis(trimethylsiloxy)titanbis(ethylacetoacetat), Bis(trimethylsiloxy)titanbis(acetylacetonat).

Bevorzugt werden folgende Titanchelatkomplexe eingesetzt, da sie kommerziell erhältlich sind und eine hohe katalytische Aktivität aufweisen:
Diethoxytitanbis(ethylacetoacetat), Diethoxytitanbis(acetylacetonat), Diisopropoxytitanbis(ethylacetoacetat), Diisopropoxytitanbis(acetylacetonat), Dibutoxytitanbis(ethylacetoacetat) und Dibutoxytitanbis(acetylacetonat).
Besonders bevorzugt sind Diethoxytitanbis(ethylacetoacetat), Diisopropoxytitan(ethylacetoacetat) und Dibutoxytitanbis(ethylacetoacetat), ganz besonders bevorzugt ist Diisopropoxytitanbis(ethylacetoacetat).

Ferner kann man auch folgende Titankatalysatoren einsetzen: Isopropoxytitantris(dioctylphosphat), Isopropoxytitantris(dodecylbenzylsulfonat), Dihydroxytitanbislactat.

Man kann auch Aluminiumkatalysatoren als Härtungskatalysatoren einsetzen, z.B. Aluminiumalkoxide

Al(OR²)₃,

wobei R² eine organische Gruppe, bevorzugt ein substituierter oder unsubstituierter Kohlenwasserstoffrest mit 1 bis 20 C-Atomen bedeutet und die drei Reste R² gleich oder verschieden sind.

Auch bei den Aluminiumalkoxide können ein oder mehrere der Alkoxyreste auch durch Acyloxyreste - OC(O)R² ersetzt sein.

Ferner kann man Aluminiumalkoxide einsetzen, bei denen ein oder mehrere Alkoxyreste durch Halogengruppen ersetzt sind.

Von den beschriebenen Aluminiumkatalysatoren sind die reinen Aluminiumalkoholate in Hinblick auf ihre Stabilität gegenüber Feuchtigkeit und die Härtbarkeit der Mischungen, denen sie zugesetzt werden, bevorzugt. Außerdem werden Aluminium-Chelatkomplexe bevorzugt.

Als Aluminiumalkoxide können beispielsweise folgende Verbindungen eingesetzt werden: Trimethoxyaluminium, Triethoxyaluminium, Triallyloxyaluminium, Tri(n-propoxy) aluminium, Triisopropoxyaluminium, Tri(n-butoxy)aluminium, Triisobutoxyaluminium, Tri(sec-butoxy) aluminium, Tri(t-butoxy)aluminium, Tri(n-pentoxy) aluminium, Tricyclopentoxyaluminium, Trihexoxyaluminium, Tricyclohexoxyaluminium, Tribenzoxyaluminium, Trioctoxyaluminium, Tris(2-ethylhexoxy) äluminium, Tridecoxyaluminium, Tridodecoxyaluminium, Tristearoxyaluminium, dimeres Tributoxyaluminium, Tris(8-hydroxyoctoxy)aluminium, Isopropoxyaluminiumbis(2-ethyl-1,3-hexandiolat), Düsopropoxyaluminium(2-ethyl-1,3-hexandiolat), (2-ethylhexoxy)aluminiumbis(2-ethyl-1,3-hexanediolat), Bis(2-ethylhexyloxy)aluminium(2-ethyl-1,3-hexanediolat), Tris(2-chloroethoxy)aluminium, Tris(2-bromoethoxy)aluminium, Tris(2-methoxyethoxy)aluminium, Tris(2-ethoxyethoxy)aluminium, Butoxydimethoxyaluminium, Methoxydibutoxyaluminium, Butoxydiethoxyaluminium, Ethoxydibutoxyaluminium, Butoxydiisopropoxyaluminium, Isopropoxydibutoxyaluminium, Triphenoxyaluminium, Tris(o-chlorophenoxy)aluminium, Tris(m-nitrophenoxy)aluminium, Tris(p-methylphenoxy)aluminium.

Beispielsweise können auch Aluminiumacylate eingesetzt werden: Diisopropoxyaluminiumacrylat, Diisopropoxyaluminiummethacrylat, Isopropoxyaluminiumdimethacrylat, Diisopropoxaluminiumhexanoat, Diisopropoxyaluminiumstearat.

Ferner kann man Aluminiumhalogenverbindungen einsetzen, z.B. Diisopropoxyaluminiumchlorid, Isopropoxyaluminiumdichlorid, Diisopropoxyaluminiumbromid, Diisopropoxyaluminiumfluorid, Diethoxyaluminiumchlorid, Dibutoxyaluminiumchlorid.

Man kann auch Aluminium-Chelatkomplexe als Katalysatoren einsetzen, beispielsweise Methoxyaluminiumbis(ethylacetoacetat), Methoxyaluminiumbis(acetylacetonat), Ethoxyaluminiumbis(ethylacetoacetat), Ethoxyaluminiumbis(acetylacetonat), Isopropoxyaluminiumbis(ethylacetoacetat), Isopropoxyaluminiumbis(methylacetoacetat), Isopropoxyaluminiumbis(t-butylacetoacetat), Dimethoxyaluminium(ethylacetoacetat), Dimethoxyaluminium(acetylacetonat), Diethoxyaluminium(ethylacetoacetat), Diethoxyaluminium(acetylacetonat), Düsopropoxyaluminium(ethylacetoacetat), Düsopropoxyaluminium(methylacetoacetat), Diisopropoxyaluminium(t-butylacetoacetat), Isopropoxyaluminiumbis(methyl-3-oxo-4,4-dimethylhexanoat), Isopropoxyaluminiumbis(ethyl-3-oxo-4,4,4-trifluoropentanoat), Isopropoxyaluminiumbis(acetylacetonat), Isopropoxyaluminiumbis(2,2,6,6-tetramethyl-3,5-heptanedionat), n-Butoxyaluminiumbis(ethylacetoacetat), n-Butoxyaluminiumbis(acetylacetonat), Isobutoxyaluminiumbis(ethylacetoacetat), Isobutoxyaluminiumbis(acetylacetonat), t-Butoxyaluminiumbis(ethylacetoacetat), t-Butoxyaluminiumbis(acetylacetonat), 2-Ethylhexoxyaluminiumbis(ethylacetoacetat), 2-Ethylhexoxyaluminiumbis(acetylacetonat), 1,2-Dioxyethanaluminium(ethylacetoacetat), 1,3-Dioxypropanaluminium(ethylacetoacetat), 2,4-Doxypentanaluminim(ethylacetoacetat), 2,4-Dmethyl-2,4-dioxypentanaluminim(ethylacetoacetat), lopropoxyaluminiumbis(triethanolaminat), Aluminiumtris(ethylacetoacetat), Aluminiumtris(acetylacetonat), Aluminium(acetylacetonat)bis(ethylacetoacetat).

Bevorzugt werden folgende Aluminium-Chelatkomplexe als Katalysatoren eingesetzt, da sie kommerziell erhältlich sind und hohe katalytische Aktivitäten aufweisen: Ethoxyaluminiumbis(ethylacetoacetat), Ethoxyaluminiumbis(acetylacetonat), Isopropoxyaluminiumbis(ethylacetoacetat), Isopropoxyaluminiumbis(acetylacetonat), Butoxyaluminiumbis(ethylacetoacetat), Butoxyaluminiumbis(acetylacetonat), Dimethoxyaluminiumethylacetoacetat, Dimethoxyaluminiumacetylacetonat, Diethoxyaluminiumethylacetoacetat, Diethoxyaluminiumacetylacetonat, Diisopropoxyaluminiumethylacetoacetat, Diisopropoxyaluminiummethylacetoacetat und Düsopropoxyaluminium(t-butylacetoacetat).

Besonders bevorzugt sind Ethoxyaluminiumbis(ethylacetoacetat), Isopropoxyaluminiumbis(ethylacetoacetat), Butoxyaluminiumbis(ethylacetoacetat), Dimethoxyaluminiumethylacetoacetat, Diethoxyaluminiumethylacetoacetat und Diisopropoxyaluminiumethylacetoacetat.

Ganz besonders bevorzugt sind Isopropoxyaluminiumbis(ethylacetoacetat) und Diisopropoxyaluminiumethylacetoacetat.

Ferner können z.B. auch folgende Aluminiumkatalysatoren eingesetzt werden: Bis(dioctylphosphato)isopropoxyaluminium, Bis(dodecylbenzylsulfonato)isopropoxyaluminium, Hydroxyaluminiumbislactat.

Als Zirkonkatalysatoren eignen sich:
Tetramethoxyzirkon, Tetraethoxyzirkon, Tetraallyloxyzirkon, Tetra-n-Propoxyzirkon, Tetraisopropoxyzirkon, Tetra-n-butoxyzirkon, Tetraisobutoxyzirkon, Tetra-(2-butoxy)zirkon, Tetra(t-butoxy)zirkon, Tetrapentoxy(zirkon), Tetracyclopentoxyzirkon, Tetrahexoxyzirkon, Tetracyclohexoxyzirkon, Tetrabenzoxyzirkon, Tetraoctoxyzirkon, Tetrakis(2-ethylhexoxy)-zirkon, Tetradecoxyzirkon, Tetradodecoxyzirkon, Tetrastearoxyzirkon, Tetrabutoyzirkon-Dimer, Tetrakis(8-hydroxyoctoxy)zirkon, Zirkondüsopropoxy-bis(2-ethyl-1,3-hexandiolat), Zirkon- bis(2-ethylhexyloxy)bis(2-ethyl-1,3-hexanediolate), Tetrakis(2-chloroethoxy)zirkon, Tetrakis(2-bromoethoxy)zirkon, Tetrakis(2-methoxyethoxy)zirkon, Tetrakis(2-ethoxyethoxy)zirkon, Butoxy-Trimethoxyzirkon, Dibutoxydimethoxyzirkon, Butoxytriethoxyzirkon, Dibutoxydiethoxyzirkon, Butoxitriisopropoxyzirkon, Dibutoxydiisopropoxyzirkon, Tetraphenoxybutan, Tetrakis(o-chlorophenoxy)zirkon, Tetrakis(m-nitrophenoxy)zirkon, Tetrakis(p-methylphenoxy)zirkon, Tetrakis(trimethylsiloxy)zirkon, Diisopropoxyzirkonbis(ethylacetoacetat), Diisopropoxyzirkonbis(acetylacetonat), Dibutoxyzirkonbis(ethylacetoacetat), Dibutoxyzirkonbis(acetylacetonat), Triisopropoxyzirkonethylacetoacetat, Triisopropoxyzirkonacetylacetonat, Tris(n-butoxy)zirkonethylacetoacetat, Tris(n-butoxy)zirkonacetylacetonat, Isopropoxyzirkontris(ethylacetoacetat), Isopropoxyzirkontris(acetylacetonat), n-Butoxyzirkontris(ethylacetoacetat), n-Butoxyzirkontris(acetylacetonat), n-Butoxyzirkon(acetylacetonat)bis(ethylacetoacetat).

Bevorzugt setzt man beispielsweise Diethoxyzirkonbis(ethylacetoacetat), Diisopropoxyzirkonbis(ethylacetoacetat), Dibutoxyzirkonbis(ethylacetoacetat), Triispropoxyzirkon(ethylacetoacetat), Tris(n-butoxy)zirkon(ethylacetoacetat), Isopropoxyzirkontris(ethylacetoacetat), n-butoxyzirkontris(ethylacetoacetat) and n-Butoxyzirkon(acetylacetonat)bis(ethylacetoacetat).
Ganz besonders bevorzugt kann man Diisopropoxyzirkonbis(ethylacetoacetat), Triispropoxyzirkon(ethylacetoacetat) and Isopropoxyzirkontris(ethylacetoacetat).

Ferner kann man beispielwseise Zirkonacylate einsetzen: Triisopropoxyzirkon, Triisopropoxyzirkonmethacrylat, Düsopropoxyzirkondimethacrylat, Isopropoxyzirkontrimethacrylat, Triisopropoxyzirkonhexanoat, Triisopropoxyzirkonstearat und ähnliche.

Als halogenierte Zirkonkatalysatoren kann man folgende Verbindungen einsetzen: Triisopropoxyzirkonchlorid, Diisopropoxyzirkondichlorid, lsopropoxyzirkontrichlorid, Triisopropoxyzirkonbromid, Triisopropoxyzirkonfluorid, Triethoxyzirkonchlorid, Tributoxyzirkonchlorid.

Ferner kann man auch Zirkonchelatkomplexe einsetzen: Dimethoxyzirkonbis(ethylacetoacetat), Dimethoxyzirkonbis(acetylacetonat), Diethoxyzirkonbis(ethylacetoacetat), Diethoxyzirkonbis(acetylacetonat), Diisopropoxyzirkonbis(ethylacetoacetat), Diisopropoxyzirkonbis(methylacetoacetat), Düsopropoxyzirkonbis(t-butylacetoacetat), Diisopropoxyzirkonbis(methyl-3-oxo-4,4-dimethylhexanoat), Diisopropoxyzirkonbis(ethyl-3-oxo-4,4,4-trifluorobutanoat), Diisopropoxyzirkonbis(acetylacetonat), Diisopropoxyzirkonbis(2,2,6,6-tetramethyl-3,5-heptanedionat), Di(n-butoxy)zirkonbis(ethylacetoacetat), Di(n-butoxy)zirkonbis(acetylacetonat), Diisobutoxyzirkonbis(ethylacetoacetat), Diisobutoxyzirkonbis(acetylacetonat), Di(t-butoxy)zirkonbis(ethylacetoacetat), Di(t-butoxy)zirkonbis(acetylacetonat), Di(2-ethylhexoxy)zirkonbis(ethylacetoacetat), Di(2-ethylhexoxy)zirkonbis(acetylacetonat), Bis(1-methoxy-2-propoxy)zirkonbis(ethylacetoacetat), Bis(3-oxo-2-butoxy)-zirkonbis(ethylacetoacetat), Bis(3-diethylaminopropoxy)zirkonbis(ethylacetoacetat), Triisopropoxyzirkon(ethylacetoacetat), Triisopropoxyzirkon(diethylmalonat), Triisopropoxyzirkon(allylacetoacetat), Triisopropoxyzirkon(methacryloxyethylacetoacetat), 1,2-Dioxyethanzirkonbis(ethylacetoacetat), 1,3-Dioxypropanzirkonbis(ethylacetoacetat), 2,4-Dioxypentanzirkonbis(ethylacetoacetat), 2,4-Dimethyl-2,4-Dioxypentanzirkonbis(ethylacetoacetat), Diisopropoxyzirkonbis(triethanotaminat), Tetrakis(ethylacetoacetato)zirkon, Tetrakis(acetylacetonato)zirkon, Bis(trimethylsiloxy)zirkonbis(ethylacetoacetat), Bis(trimethylsiloxy)zirkonbis(acetylacetonat).

Folgende Zirkonchelatkomplexen werden bevorzugt eingesetzt, da sie kommerziell erhältlich sind und eine hohe katalytische Aktivität aufweisen:
Diethoxyzirkonbis(ethylacetoacetat), Diethoxyzirkonbis(acetylacetonat), Diisopropoxyzirkonbis(ethylacetoacetat), Diisopropoxyzirkonbis(acetylacetonat), Dibutoxyzirkonbis(ethylacetoacetat) and Dibutoxyzirkonbis(acetylacetonat)

Besonders bevorzugt ist Diethoxyzirkonbis(ethylacetoacetat), Diisopropoxyzirkon(ethylacetoacetat) and Dibutoxyzirkonbis(ethylacetoacetat), ganz besonders bevorzugt ist Diisopropoxyzirkonbis(ethylacetoacetat).

Ferner kann man auch folgende Zirkonkatalysatoren einsetzen: Isopropoxyzirkontris(dioctylphosphat), Isopropoxyzirkontris(dodecylbenzylsulfonat), Dihydroxyzirkonbislactat.

Außerdem kann man als Härtungskatalysatoren Carbonsäuresalze von Metallen, oder auch eine Mischung mehrerer solcher Salze, heranziehen, wobei diese ausgewählt sind aus den Carboxylaten folgender Metalle: Calcium, Vanadium, Eisen, Titan, Kalium, Barium, Mangan, Nickel, Kobalt und/oder Zirkon.
Von den Carboxylaten sind die Calcium-, Vanadium-, Eisen-, Titan-, Kalium-, Barium-, Mangan- und Zirkoniumcarboxylate bevorzugt, da sie eine hohe Aktivität aufweisen.
Besonders bevorzugt werden Calcium-, Vanadium-, Eisen-, Titan- und Zirkoniumcarboxylate.
Ganz besonders bevorzugt werden Eisen- und Titancarboxylate.

Man kann z. B. folgende Verbindungen einsetzen:
Eisen(II)(2-ethylhexanoat), Eisen(III)(2-ethylhexanoat), Titan(IV)(2-ethylhexanoat), Vanadium(III)(2-ethylhexanoat), Calcium(II)(2-ethylhexanoat) Kalium-2-ethylhexanoat, Barium(II)(2-ethylhexanoat), Mangan(II)(2-ethylhexanoat), Nickel(II)(2-ethylhexanoat), Cobalt(II)(2-ethylhexanoat), Zircon(IV)(2-ethylhexanoat), Eisen(II)neodecanoat, Eisen(III)neodecanoat, Titan(IV)neodecanoat, Vanadium(III)neodecanoat, Calcium(II)neodecanoat , Kaliumneodecanoat, Barium(II)neodecanoat, Zirconium(IV)neodecanoat, Eisen(II)oleat, Eisen(III)oleat, Titantetraoleat, Vanadium(III)oleat, Calcium(II)oleat, Kaliumoleat, Barium(II)oleat, Mangan(II)oleat, Nickel(II)oleat, Cobalt(II)oleat, Zirconium(IV)oleat, Eisen(II)naphthenat, Eisen(III)naphthenat, Titan(IV)naphthenat, Vanadium(III)naphthenat, Calciumdinaphthenat, Kaliumnaphthenat, Bariumdinaphthenat, Mangandinaphthenat, Nickel dinaphthenat, Cobaltdinaphthenat, Zircon(IV)naphthenat.
In Hinblick auf die katalytische Aktivität werden Eisen(II)2-ethylhexanoat, Eisen (III)2-ethylhexanoat, Titan(IV)2-ethylhexanoat, Eisen(II)neodecanoat, Eisen(III)neodecanoat, Titan(IV)neodecanoat, Eisen(II)oleat, Eisen(III)oleat, Titanium(IV)oleat, Eisen(II)naphthenat, Eisen(III)naphthenat und Titan(IV)naphthenat bevorzugt, und Eisen(III) 2-ethylhexanoat, Eisen(III)neodecanoat, Eisen(III)oleat und Eisen(III)naphthenat besonders bevorzugt.
In Hinblick auf das Nichteintreten von Verfärbungen sind bevorzugt: Titan(IV)2-ethylhexanoat, Calcium(II)2-ethylhexanoat, Kalium-2-ethylhexanoat, Barium(II)2-ethylhexanoat, Zircon(IV)2-ethylhexanoat, Titan(IV)neodecanoat, Calcium(II)neodecanoat, Kaliumneodecanoat, Barium(II)neodecanoat, Zircon(IV)neodecanoat, Titan(IV)oleat, Calcium(II)oleat, Kaliumoleat, Badum(II)oleat, Zircon(IV)oleat, Titan(IV)naphthenat, Calcium(II)naphthenat, Kaliumnaphthenat, Barium(II)naphthenat und Zircon(IV)naphthenat.

Die Calciumcarboxylate, Vanadiumcarboxylate, Eisencarboxylate, Titancarboxylate, Kaliumcarboxylate, Bariumcarboxylate, Mangancarboxylate, Nickelcarboxylate, Cobaltcarboxylate und Zirconcarboxylate können einzeln oder als Mischung mehrerer Katalysatoren aus einer oder mehrerer der erwähnten Gruppen eingesetzt werden. Außerdem kann man diese Metallcarboxylate in Verbindung mit Zinncarboxylaten, Bleicarboxylaten Bismutcarboxylaten und Cercarboxylaten einsetzen.

Die erfindungsgemäße Zubereitung kann bis zu 5 Gew%, beispielsweise etwa 0,002 bis etwa 5 Gew.-%, bevorzugt 0,1 bis 0,5 Gew.-%, solche Katalysatoren in der Gesamtmenge enthalten.

Weitere Zusatzstoffe, die dazu dienen bestimmte Eigenschaften der Zubereitung zu variieren können enthalten sein. Darunter können beispielsweise Farbstoffe wie Titandioxid, Füllstoffe wie Talkum, Ton und dergleichen sein. Gegebenenfalls können in den erfindungsgemäßen Klebstoffen geringe Mengen an thermoplastischen Polymeren oder Copolymeren vorliegen, beispielsweise Ethylenvinylacetat (EVA), Ethylenacrylsäure, Ethylenmethacrylat und Ethylen-n-butylacrylatcopolymere, die dem Klebstoff gegebenfalls zusätzliche Flexibilität, Zähigkeit und Stärke verleihen. Es ist ebenfalls möglich bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, beispielsweise die Acetate mit einem Substitutionsgrad von weniger als 2,5.

Die erfindungsgemäße Zubereitung kann bis zu etwa 80 Gew.-% an Füllstoffen enthalten. Als Füllstoffe geeignet sind beispielsweise gegenüber Isocyanaten und Silanen inerte anorganische Verbindungen wie Kreide, Kalkmehl, gefällte Kieselsäure, pyrogene Kieselsäure, Zeolithe, Bentonite, gemahlene Mineralstoffe, Calciumcarbonat, Quarzstaub, gefälltes Siliziumdioxid, Kieselsäureanhydrid, Siliziumhydrat oder Ruß, Magnesiumcarbonat, gebrannter Ton, Ton, Talk, Titanoxid, Eisenoxid, Zinkoxid, Zellstoff, Holzmehl, Glimmer, Spreu, Graphit, feines Aluminiumpulver oder Feuersteinpulver, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln, sowie funktionelle Füllstoffe, der die rheologische Eigenschaften positiv beeinflusst, beispielsweise hochdisperse Kieselsäure, insbesondere mit niedriger BET-Oberfläche von 20-150 m²/g, bevorzugt 30-100 m²/g, insbesondere bevorzugt etwa 50 m²/g . Besonders vorteilhaft ist es, wenn die pyrogenen und/oder gefällten Kieselsäuren eine BET-Oberfläche von 10 bis 90 m²/g aufweisen. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Für manche Anwendungen sind Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, sind aus anorganischen oder organischen Stoffen zusammengesetzt, jede mit einem Durchmesser von 1 mm oder weniger, bevorzugt von 500 µm oder weniger.

Die Füllstoffe werden vorzugsweise in einer Menge von 1 bis 80 Gew.-% bezogen auf das Gesamtgewicht der Zubereitung eingesetzt.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silangruppe trägt und beim Vernetzen bzw. Aushärten in das Endprodukt eingebaut wird.

Hierzu besonders geeignet sind die Produkte Lowilite 75, Lowilite 77 (Fa. Great Lakes, USA).

Die erfindungsgemäße Zubereitung kann beispielsweise Zusatzstoffe enthalten, die eine Modifizierung der Klebeigenschaften erlauben. Hierzu sind beispielsweise die so genannten Tackifier-Harze geeignet, die sich in natürliche Harze und synthetische Harze (Kunstharze) unterteilen lassen. Geeignete Tackifier-Harze sind beispielsweise Alkydharze, Epoxidharze, Melaminharze, Phenolharze, Urethanharze, Kohlenwasserstoffharze sowie natürliche Harze wie Kolophonium, Holzterpentinöl und Tallöl. Als synthetische Kohlenwasserstoffharze sind beispielsweise Ketonharze, Cumaron-Indenharze, Isocyanatharze und Terpen-Phenolharze geeignet. Im Rahmen der vorliegenden Erfindung ist der Einsatz von synthetischen Harzen bevorzugt.

Weiterhin können die erfindungsgemäßen Zubereitungen Flammschutzmittel enthalten, wie beispielsweise übliche phosphorhaltige Verbindungen, insbesondere elementarer Phosphor, Phosphate oder Phosponate in Frage, beispielsweise Triethylphosphat oder Trichlorpropylphosphat. Derartige Verbindungen können gleichzeitig weichmachende und viskositätsregulierende Eigenschaften aufweisen. Weitere geeignete Flammschutzmittel sind beispielsweise Diphenylkresylphosphate, Triphenylphosphat, Dimethylmethanphosphonat und dergleichen. Darüber hinaus können als Flammschutz auch Chlorparaffine eingesetzt werden. Ebenso geeignet sind halogenierte Polyester- oder Polyetherpolyole, beispielsweise handelsübliches bromiertes Polyetherpolyol.

Demgemäß ist ein weiterer Gegenstand der vorliegenden Erfindung eine Zubereitung, enthaltend
- 5 Gew% bis 80 Gew% einer Zusammensetzung nach einem der Ansprüche 1 bis 8 oder eines Gemisches aus zwei oder mehr solcher Zusammensetzungen,
- 0 Gew% bis 50 Gew% eines Reaktivverdünners oder eines Gemisches aus zwei oder mehr Reaktivverdünnern,
- 0 Gew% bis 7 Gew% UV-Stabilisatoren
- 0 Gew% bis 50.Gew% Weichmachern
- 0 Gew% bis 80 Gew% Füllstoffen.

Ein weiterer Gegenstand der vorliegenden Erfindung ist die Verwendung der erfindungsgemäßen härtbaren Zusammensetzungen oder erfindungsgemäßen Zubereitungen als Kleb-, Dicht oder Beschichtungsmittel.
Besonders geeignet sind die erfindungsgemäßen Zubereitungen beispielsweise als Kontaktklebstoff, 1K-Klebstoff, 2K-Klebstoff, Montageklebstoff, Dichtmasse, insbesondere Fugendichtmasse, und zur Oberflächenversiegelung.

Die erfindungsgemäßen Zubereitungen sind beispielsweise als Klebstoff für Kunststoffe, Metalle, Spiegel, Glas, Keramik, mineralische Untergründe, Holz, Leder, Textilien, Papier, Pappe und Gummi geeignet, wobei die Materialien jeweils mit sich selbst oder beliebig untereinander verklebt werden können.

Weiterhin eignen sich die erfindungsgemäßen Zubereitungen beispielsweise als Dichtstoff für KunstStoffe, Metalle, Spiegel, Glas, Keramik, mineralische Untergründe, Holz, Leder, Textilien, Papier, Pappe und Gummi, wobei die Materialien jeweils mit sich selbst oder beliebig gegeneinander abgedichtet werden können.

Weiterhin eignen sich die erfindungsgemäßen Zubereitungen beispielsweise als Beschichtungsstoff, insbesondere als Oberflächenbeschichtungsmittel für Oberflächen aus Kunststoff, Metall, Glas, Keramik, mineralischen Materialien, Holz, Leder, Textilien, Papier, Pappe und Gummi.

Bei allen oben genannten Anwendungen können die erfindungsgemäßen Zubereitungen als einkomponentige, d.h., mit Luftfeuchtigkeit aushärtende Systeme oder als zweikomponentige Systeme eingesetzt werden, wobei die zweite Komponente Wasser enthält.

Daher ist ein weiterer Gegenstand der vorliegenden Erfindung Kleb-, Dicht- oder Beschichtungsstoffe enthaltend die erfindungemäßen härtbaren Zusammensetzungen.

Die erfindungsgemäßen härtbaren Zusammensetzungen härten in der Regel in Gegenwart von Feuchtigkeit aus.

Die folgenden Beispiele dienen der näheren Erläuterung der Erfindung.

### Beispiele

### Vergleichsbeispiel 1

3282 g (281 mmol) Polypropylenglykol 12000 (OHZ=9,6) werden in einem 5000 ml Reaktor bei 80°C im Vakuum getrocknet. Unter Stickstoffatmosphäre wird bei 80°C 0,7 g Dibutylzinnlaurat hinzugegeben und anschließend mit 142 g (674 mmol) Isocyanatopropyltrimethoxysilan (%NCO=19,9) versetzt. Nach einstündigem Rühren bei 80°C wird das entstandene Polymer abgekühlt und mit 71,0 g Vinyltrimethoxysilan und 53,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Vergleichsbeispiel 2

326 g (28 mmol) Polypropylenglykol 12000 (OHZ=9,7) werden in einem 500 ml Dreihalskolben bei 80°C im Vakuum getrocknet. Unter Stickstoffatmosphäre wird bei 80°C 0,07 g Dibutylzinnlaurat hinzugegeben und anschließend mit 11,4 g (68 mmol) Isocyanatomethyldimethoxysilan (%NCO=24,9) versetzt. Nach einstündigem Rühren bei 80°C wird das entstandene Polymer abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Vergleichsbeispiel 3

325 g (29 mmol) Polypropylenglykol 12000 (OHZ=10,1) werden in einem 500 ml Dreihalskolben bei 80°C im Vakuum getrocknet. Unter Stickstoffatmosphäre wird bei 80°C 0,07 g Dibutylzinnlaurat hinzugegeben und anschließend mit 12,5 g (59 mmol) Isocyanatopropyltrimethoxysilan (%NCO=19,6) versetzt. Nach einstündigem Rühren bei 80°C wird das entstandene Polymer abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Vergleichsbeispiel 4

140 g (12 mmol) Polypropylenglykol 12000 (OHZ=9,5) werden in einem 250 ml Dreihalskolben bei 80°C im Vakuum getrocknet. Unter Stickstoffatmosphäre wird bei 80°C 70 mg Dibutylzinnlaurat hinzugegeben und anschließend mit 4,1 g (24 mmol) Isocyanatomethyldimethoxysilan (%NCO=24,5) versetzt. Nach einstündigem Rühren bei 80°C wird das entstandene Polymer abgekühlt und mit 3,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 1

140 g (12 mmol) Polypropylenglykol 12000 (Hydroxylzahl (OHZ) = 9,5) werden in einem 250 ml Dreihalskolben bei 80°C im Vakuum getrocknet. Unter Stickstoffatmosphäre wird bei 80°C 0,3 g Dibutylzinndilaurat hinzugegeben. Hierzu werden 0,7 g (7 mmol) n-Butylisocyanat (%-Gehalt NCO = 42,0) zugegeben. Nach einstündigem Rühren wird mit 3,7 g (21 mmol) Isocyanatomethyldimethoxymethylsilan (%NCO = 24,5) versetzt und eine weitere Stunde bei 80°C gerührt. Die entstandene Präpolymerenmischung wird abgekühlt und mit 3,0 g N-Trimethoxysilylmethyl-O-methylcarbamat und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 2

3435,0 g (297 mmol) Polypropylenglykol 12000 (OHZ = 9,7) werden in einem 4000 ml Dreihalskolben bei 80°C im Vakuum getrocknet. Unter Stickstoffatmosphäre wird bei 80°C 7,3 g Dibutylzinnlaurat hinzugegeben. Hierzu werden 17,8 g (178 mmol) n-Butylisocyanat (%NCO = 42,0) zugegeben. Nach einstündigem Rühren wird mit 88,2 g (416 mmol) Isocyanatopropyltrimethoxysilan (%NCO = 19,8) versetzt und eine weitere Stunde bei 80°C gerührt. Die entstandene Präpolymerenmischung wird abgekühlt und mit 73,4 g Vinyltrimethoxysilan und 55,1 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 3

140 g (12 mmol) Polypropylenglykol 12000 (OHZ = 9,7) werden in einem 250 ml Dreihalskolben bei 80°C im Vakuum getrocknet. Unter Stickstoffatmosphäre wird bei 80°C 0,3 g Dibutylzinnlaurat hinzugegeben. Hierzu werden 0,5 g (5 mmol) n Butylisocyanat (%NCO = 42,0) zugegeben. Nach einstündigem Rühren wird mit 4,4 g (20 mmol) lsocyanatopropyltrimethoxysilan (%NCO = 19,0) versetzt und eine weitere Stunde bei 80°C gerührt. Die entstandene Präpolymerenmischung wird abgekühlt und mit 3,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 4

325 g (28 mmol) Polypropylenglykol 12000 (OHZ = 9,7) werden in einem 500 ml Dreihalskolben bei 80°C im Vakuum getrocknet. Unter Stickstoffatmosphäre wird bei 80°C 0,7 g Dibutylzinnlaurat hinzugegeben. Hierzu werden 2,8 g (28 mmol) n Butylisocyanat (%NCO = 42,0) zugegeben. Nach einstündigem Rühren wird mit 8,4 g (39 mmol) Isocyanatotrimethoxypropylsilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 5

324 g (28 mmol) Polypropylenglykol 12000 (OHZ = 9,7) werden in einem 500 ml Dreihalskolben bei 80°C im Vakuum getrocknet. Unter Stickstoffatmosphäre wird bei 80°C 0,7 g Dibutylzinnlaurat hinzugegeben. Hierzu werden 1,7 g (17 mmol) n Butylisocyanat (%NCO = 42,0) zugegeben. Nach einstündigem Rühren wird mit 10,8 g (51 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 6

140 g (12 mmol) Polypropylenglykol 12000 (OHZ = 9,5) werden in einem 250 ml Dreihalskolben bei 80°C im Vakuum getrocknet. Unter Stickstoffatmosphäre wird bei 80°C 0,3 g Dibutylzinnlaurat hinzugegeben. Hierzu werden 0,4 g (5 mmol) n Butylisocyanat (%NCO = 42,0) zugegeben. Nach einstündigem Rühren wird mit 3,6 g (21 mmol) Isocyanatomethyldimethoxymethylsilan (%NCO = 24,5) versetzt und eine weitere Stunde bei 80°C gerührt. Die entstandene Präpolymerenmischung wird abgekühlt und mit 3,0 g Vinyltrimethoxysilan und 2,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 7

327 g (28 mmol) Polypropylenglykol 12000 (OHZ = 9,7) werden in einem 500 ml Dreihalskolben bei 80°C im Vakuum getrocknet. Unter Stickstoffatmosphäre wird bei 80°C 0,7 g Dibutylzinnlaurat hinzugegeben. Hierzu werden 2,8 g (28 mmol) n Butylisocyanat (%NCO = 42,0) zugegeben. Nach einstündigem Rühren wird mit 6,8 g (40 mmol) Isocyanatomethyldimethoxymethylsilan (%NCO = 24,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 8

327 g (28 mmol) Polypropylenglykol 12000 (OHZ = 9,7) werden in einem 500 ml Dreihalskolben bei 80°C im Vakuum getrocknet. Unter Stickstoffatmosphäre wird bei 80°C 0,07 g Dibutylzinnlaurat hinzugegeben. Hierzu werden 2,0 g (17 mmol) Phenylisocyanat (%NCO = 35,0) zugegeben. Nach einstündigem Rühren wird mit 8,5 g (40 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 9

324 g (28 mmol) Polypropylenglykol 12000 (OHZ = 10,1) werden in einem 500 ml Dreihalskolben bei 80°C im Vakuum getrocknet. Unter Stickstoffatmosphäre wird bei 80°C 0,07 g Dibutylzinnlaurat hinzugegeben. Hierzu werden 2,1 g (18 mmol) Phenylisocyanat (%NCO = 35,0) zugegeben. Nach einstündigem Rühren wird mit 11,3 g (53 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 10

325 g (29 mmol) Polypropylenglykol 12000 (OHZ = 10,1) werden in einem 500 ml Dreihalskolben bei 80°C im Vakuum getrocknet. Unter Stickstoffatmosphäre wird bei 80°C 0,07 g Dibutylzinnlaurat hinzugegeben. Hierzu werden 2,8 g (23 mmol) Phenylisocyanat (%NCO = 35,0) zugegeben. Nach einstündigem Rühren wird mit 10,0 g (47 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6;6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift (Beispiel 11) zu einer härtbaren Zusammensetzung weiterverarbeitet wird.

### Beispiel 11: Allgemeiner Vorschrift zur Herstellung der erfindungsgemäßen härtbaren Zusammensetzungen:

25 Gewichtsteile der in den Beispielen hergestellten Polymermischung wurden anschließend in einem Rührkessel mit 20 Gewichtsteilen Düsoundecylphtalat mittels eines Speedmixers 30 s innig vermengt. In die so erhaltene Mischung wurden nacheinander 45 Gewichtsteile gefälltes Calciumcarbonat (je 50 % Socal U1S2 und Omya BLP3), 3,35 Gewichtsteile stabilisiertes Titandioxid vom Rutiltyp (Kronos 2056), 1,5 Teile Vinyltrimethoxysilan (Wacker Geniosil XL10), 0,95 Gewichtsteile 3-Aminopropyltrimethoxisilan (Wacker Geniosil GF96) sowie 0,05 Gewichtsteile Dibutylzinndilaurat eingebracht und das so entstandene Gemenge für 30 s in einem Speedmixer innig vermengt.

### Beispiel 12: Prüfbedingungen

Die hergestellten Polymere wurden jeweils mit 1 % N-Aminoethyl-3-aminopropyltrimethoxysilan und 0,2 % Dibutylzinndilaurat versetzt. Von diesen Mischungen wurden Hautbildungszeit (Skin over time / SOT) und die Zeit zur Ausbildung einer klebfreien Schicht (Tack free time / TFT) ermittelt.
Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Knochen) ausgestanzt und die mechanischen Daten (Module, Dehnung, Rückstellvermögen) in Anlehnung an DIN EN 27389 und DIN EN 28339 bestimmt.

**Tabelle 1: Eigenschaften der erfindungsgemäßen Beispiel und der Vergleichsbeispiele, Ergebnisse nach 7 Tagen**

| | Vergleichbeispiel | | | | Beispiel | | | | | | | | | |
|---|---|---|---|---|---|---|---|---|---|---|---|---|---|---|
| | 1 | 2 | 3 | 4 | 1 | 2 | 3 | 4 | 5 | 6 | 7 | 8 | 9 | 10 |
| SOT [min] | 23 | 10 | 42,5 | 3,25 | 5,0 | 20 | 22,30 | 60 | 20 | 4,3 | 5,35 | 50 | 33 | 30 |
| TFT [h] | 24 | 24 | 24 | 24 | 24 | 24 | 24 | 24 | 24 | 24 | 24 | 24 | 24 | 24 |
| Bruch [N/mm²] | 0,76 | 0,75 | 0,67 | 0,92 | 0,80 | 0,57 | 0,57 | 0,26 | 0,43 | 0,77 | 0,11 | 0,44 | 0,59 | 0,49 |
| Dehnung [%] | 137 | 164 | 120 | 298 | 489 | 218 | 153 | 129 | 123 | 485 | 273 | 168 | 148 | 136 |
| E- Modul [N/mm²] | 0,63 | 0,62 | 0,61 | 0,55 | 0,32 | 0,32 | 0,44 | 0,25 | 0,38 | 0,29 | 0,06 | 0,33 | 0,46 | 0,40 |
| Rückstellkraft [%] | 90 | 0 | 95 | 0 | 0% | 85 | 80 | 90 | 90 | 0 | 0 | 90 | 80 | 90 |

## Patentansprüche

1. Härtbare Zusammensetzung, umfassend
(i) mindestens ein Polymer A mit mindestens einer reaktiven Silylgruppe und
(ii) mindestens ein Polymer B mit mindestens einer reaktiven Silylgruppe,
wobei die Zahl der reaktiven Silylgruppen in (i) größer als die Zahl der reaktiven Silylgruppen in (ii) ist und die reaktiven Silylgruppen unter Ausbildung von
Siloxanbindungen vernetzen können, wobei das Polymer B eine Verbindung der allgemeinen Formel (II) darstellt
(X₃) (X₂)(X₁) Si - T- Z - [Y]- G - R² (II)
wobei X₁, X₂, X₃ unabhängig voneinander ein Halogenatom, eine Amino, Mercapto- oder Alkenyloxygruppe, ein Alkylrest mit 1 bis 40 C-Atomen oder ein Rest OR¹ darstellen kann, wobei R¹ ein Alkylrest mit 1 bis 40 C-Atomen oder ein Acylrest mit 1 bis 40 C-Atomen ist,
T ein geradkettiger oder verzweigter, substituierter oder unsubstituierter Alkylenrest mit 1 bis 20 C-Atomen,
Z eine Carbamat-, Carboxy-, Carbonat- oder Sulfonatgruppe oder ein Sauerstoffatom,
[Y] ein organisches Grundgerüst,
G eine Carbamat-, Carboxy-, Carbonat- oder Sulfonatgruppe oder ein Sauerstoffatom oder eine Gruppe - E - D - E'-,
wobei E eine Carbamat-, Carboxy-, Carbonat- oder Sulfonatgruppe oder ein Sauerstoffatom,
E' eine Carbamat-, Carboxy-, Carbonat-, Sulfonat- Harnstoffgruppe oder oder ein Sauerstoffatom,
D ein geradkettiger oder verzweigter, substituierter oder unsubstituierter Alkylen-, Acylen- oder Arylenrest mit 1 bis 40 C-Atomen ist,
R² ein geradkettiger oder verzweigter, substituierter oder unsubstituierter Alkyl-, Acyl- oder Arylrest mit 1 bis 40 C-Atomen oder eine Silylgruppe ist, welche nicht zur Ausbildung von Siloxanbindung befähigt ist.

2. Härtbare Zusammensetzung nach Anspruch 1, **dadurch gekennzeichnet, dass** das Polymer A eine Verbindung der allgemeinen Formel (I) darstellt
(X₃) (X₂) (X₁)Si - T -Z - [Y] -Z' - T' - Si(X₁') (X₂')(X₃') (I)
wobei X₁, X₂, X₃, X₁', X₂', X₃' unabhängig voneinander ein Halogenatom, eine Amino, Mercapto- oder Alkenyloxygruppe, ein Alkylrest mit 1 bis 40 C-Atomen oder ein Rest OR¹ darstellen kann, wobei R¹ ein Alkylrest mit 1 bis 40 C-Atomen oder ein Acylrest mit 1 bis 40 C-Atomen ist,
T und T' unabhängig voneinander ein geradkettiger oder verzweigter, substituierter oder unsubstituierter Alkylenrest mit 1 bis 20 C-Atomen,
Z und Z' unabhängig voneinander eine Carbamat-, Carboxy-, Carbonat- oder Sulfonatgruppe oder ein Sauerstoffatom,
[Y] ein organisches Grundgerüst ist.

3. Härtbare Zusammensetzung nach einem der Ansprüche 1 bis 2, **dadurch gekennzeichnet, dass** das organische Grundgerüst (Y) eine Polydispersität PD (M_{w}/Mₙ) von weniger als 4,8, bevorzugt weniger als 1,7 aufweist.

4. Härtbare Zusammensetzung nach einem der Ansprüche 1 bis 3, **dadurch gekennzeichnet, dass** das organische Grundgerüst (Y) eine oder mehrere Silylgruppen trägt, die nicht zur Ausbildung von Siloxanbindungen befähigt sind.

5. Härtbare Zusammensetzung nach einem der Ansprüche 1 bis 4, **dadurch gekennzeichnet, dass** Z und Z' in Formel (I) und/ oder Formel (II) eine Carbamatgruppe ist.

6. Härtbare Zusammensetzung erhältlich durch Umsetzung von mindestens einer isocyanat-reaktiven Verbindung mit mindestens einer ersten isocyanathaltigen Silanverbindung und mit mindestens einer zweiten isocyanthaltigen Verbindung, wobei das Reaktionsprodukt mindestens zwei polymere Verbindungen, Polymer A und Polymer B umfasst, die jeweils mindestens eine reaktive Silylgruppe aufweisen, wobei die Zahl der reaktiven Silylgruppen im Polymer A größer ist als die Zahl der reaktiven Silylgruppen im Polymer B, wobei das Polymer B eine Verbindung der allgemeinen Formel (II) darstellt
(X₃) (X₂) (X₁) Si-T-Z-[Y]-G-R² (II)
wobei X₁, X₂, X₃ unabhängig voneinander ein Halogenatom, eine Amino, Mercapto- oder Alkenyloxygruppe, ein Alkylrest mit 1 bis 40 C-Atomen oder ein Rest OR¹ darstellen kann, wobei R¹ ein Alkylrest mit 1 bis 40 C-Atomen oder ein Acylrest mit 1 bis 40 C-Atomen ist,
T ein geradkettiger oder verzweigter, substituierter oder unsubstituierter Alkylenrest mit 1 bis 20 C-Atomen,
Z eine Carbamatgruppe,
[Y] ein organisches Grundgerüst,
G eine Carbamatgruppe oder eine Gruppe - E - D - E'-,
wobei E eine Carbamat-, Carboxy-, Carbonat- oder Sulfonatgruppe oder ein Sauerstoffatom,
E' eine Carbamat-, Carboxy-, Carbonat- Sulfonat- oder Harnstoffgruppe oder ein Sauerstoffatom,
D ein geradkettiger oder verzweigter, substituierter oder unsubstituierter Alkylen-, Acylen- oder Arylenrest mit 1 bis 40 C-Atomen ist,
R² ein geradkettiger oder verzweigter, substituierter oder unsubstituierter Alkyl-, Acyl- oder Arylrest mit 1 bis 40 C-Atomen oder eine Silylgruppe ist, welche nicht zur Ausbildung von Siloxanbindung befähigt ist.

7. Härtbare Zusammensetzung nach Anspruch 6, **dadurch gekennzeichnet, dass** das Polymer A eine Verbindung der allgemeinen Formel (I) darstellt
(X₃) (X₂) (X₁) Si - T -Z- [Y] -Z' - T' - Si(X₁') (X₂')(X₃') (I)
wobei X₁, X₂, X₃, X₁', X₂', X₃ unabhängig voneinander ein Halogenatom, eine Amino, Mercapto- oder Alkenyloxygruppe, ein Alkylrest mit 1 bis 40 C-Atomen oder ein Rest OR¹ darstellen kann, wobei R¹ ein Alkylrest mit 1 bis 40 C-Atomen oder ein Acylrest mit 1 bis 40 C-Atomen ist,
T und T' unabhängig voneinander ein geradkettiger oder verzweigter, substituierter oder unsubstituierter Alkylenrest mit 1 bis 20 C-Atomen,
Z und Z' eine Carbamatgruppe,
[Y] ein organisches Grundgerüst ist.

8. Härtbare Zusammensetzung nach einem der Ansprüche 1 bis 7, **dadurch gekennzeichnet, dass** das Polymer A im Mittel mindestens mehr als 1,2, bevorzugt mehr als 1,5, ganz besonders bevorzugt mehr als 1,8 reaktive Silylgruppen im Molekül enthält.

9. Härtbare Zusammensetzung nach einem der Ansprüche 1 bis 8, **dadurch gekennzeichnet, dass** das Polymer B im Mittel 1,2 bis 1,8 reaktive Silylgruppen im Molekül enthält.

10. Kleb-, Dicht- oder Beschichtungsstoffe enthaltend eine härtbare Zusammensetzung nach einem der Ansprüche 1 bis 9.

11. Zubereitungen, enthaltend eine härtbare Zusammensetzung nach einem der Ansprüche 1 bis 9.

12. Zubereitung, enthaltend
5 Gew% bis 80 Gew% einer Zusammensetzung nach einem der Ansprüche 1 bis 9 oder eines Gemisches aus zwei oder mehr solcher Zusammensetzungen,
0 Gew% bis 50 Gew% eines Reaktivverdünners oder eines Gemisches aus zwei oder mehr Reaktiwerdünnern,
0 Gew% bis 7 Gew% UV-Stabilisatoren,
0 Gew% bis 50 Gew% Weichmachern,
0 Gew% bis 80 Gew% Füllstoffen.

13. Verwendung einer härtbaren Zusammensetzung nach einem der Ansprüche 1 bis 9 oder einer Zubereitung nach einem der Ansprüche 11 oder 12 als Kleb-, Dicht- oder Beschichtungsstoffe.

## Claims

1. Curable composition, comprising
(i) at least one polymer A containing at least one reactive silyl group and
(ii) at least one polymer B containing at least one reactive silyl group,
wherein the number of the reactive silyl groups in (i) is greater than the number of the reactive silyl groups in (ii) and the reactive silyl groups can crosslink to form siloxane bonds, wherein the polymer B represents a compound of the general Formula (II)
**(X₃) (X₂) (X₁) si -T- Z - [Y]- G - -R²** **(II)**
wherein X₁, X₂, X₃ independently of each other can represent a halogen atom, an amino, mercapto or alkenyloxy group, an alkyl group containing 1 to 40 carbon atoms or an OR¹ group, wherein R¹ is an alkyl group containing 1 to 40 carbon atoms or an acyl group containing 1 to 40 carbon atoms,
T is a straight chain or branched, substituted or unsubstituted alkylene group containing 1 to 20 carbon atoms,
Z is a carbamate, carboxy, carbonate or sulfonate group or an oxygen atom,
[Y] is an organic backbone,
G is a carbamate, carboxy, carbonate or sulfonate group or an oxygen atom or an - E - D - E'- group,
wherein E is a carbamate, carboxy, carbonate or sulfonate group or an oxygen atom,
E' is a carbamate, carboxy, carbonate, sulfonate, urea group or an oxygen atom,
D is a straight chain or branched, substituted or unsubstituted alkylene, acylene or arylene group containing 1 to 40 carbon atoms,
R² is a straight chain or branched, substituted or unsubstituted alkyl, acyl or aryl group containing 1 to 40 carbon atoms or a silyl group that is incapable of forming a siloxane bond.

2. Curable composition according to claim 1, **characterised in that** the polymer A represents a compound of the general Formula (I)
**(X₃) (X₂) (X₁)Si - T -Z - [Y]-Z' - T'- Si(X_{1'}) (X₂')(X_{3'})** **(I)**
wherein X₁, X₂, X₃ X'₁, X'₂, X'₃ independently of each other can represent a halogen atom, an amino, mercapto or alkenyloxy group, an alkyl group containing 1 to 40 carbon atoms or an OR¹ group, wherein R¹ is an alkyl group containing 1 to 40 carbon atoms or an acyl group containing 1 to 40 carbon atoms,
T and T' are independently of one another a straight chain or branched, substituted or unsubstituted alkylene group containing 1 to 20 carbon atoms,
Z and Z' are independently of one another a carbamate, carboxy, carbonate or sulfonate group or an oxygen atom,
[Y] is an organic backbone.

3. Curable composition according to one of the claims 1 to 2, **characterised in that** the organic backbone (Y) has a polydispersity PD (M_{w}/Mₙ) of less than 4.8, preferably less than 1.7.

4. Curable composition according to one of the claims 1 to 3, **characterised in that** the organic backbone (Y) carries one or more silyl groups that are incapable of forming siloxane bonds.

5. Curable composition according to one of the claims 1 to 4, **characterised in that** Z and Z' in Formula (I) and/or Formula (II) are a carbamate group.

6. Curable composition obtainable by treating at least one isocyanate-reactive compound with at least one first isocyanate-containing silane compound and with at least one second isocyanate-containing compound, wherein the reaction product contains at least two polymeric compounds, polymer A and polymer B, which each have at least one reactive silyl group, wherein the number of the reactive silyl groups in the polymer A is greater than the number of the reactive silyl groups in the polymer B, wherein the polymer B represents a compound of the general Formula (II)
**(X₃) (X₂) (X₁) Si - T- Z - [Y]- G - R²** **(II)**
wherein X₁, X₂, X₃ independently of each other can represent a halogen atom, an amino, mercapto or alkenyloxy group, an alkyl group containing 1 to 40 carbon atoms or an OR¹ group, wherein R¹ is an alkyl group containing 1 to 40 carbon atoms or an acyl group containing 1 to 40 carbon atoms,
T is a straight chain or branched, substituted or unsubstituted alkylene group containing 1 to 20 carbon atoms,
Z is a carbamate group,
[Y] is an organic backbone,
G is a carbamate group or an - E - D - E'- group,
wherein E is a carbamate, carboxy, carbonate or sulfonate group or an oxygen atom,
E' is a carbamate, carboxy, carbonate, sulfonate or urea group or an oxygen atom,
D is a straight chain or branched, substituted or unsubstituted alkylene, acylene or arylene group containing 1 to 40 carbon atoms,
R² is a straight chain or branched, substituted or unsubstituted alkyl, acyl or aryl group containing 1 to 40 carbon atoms or a silyl group that is incapable of forming a siloxane bond.

7. Curable composition according to claim 6, **characterised in that** the polymer A represents a compound of the general Formula (I)
**(X₃) (X₂) (X₁)Si -T-Z - [Y]-Z'- T' - Si(X₁') (X'₂)(X₃')** **(I)**
wherein X₁, X₂, X₃ X'₁, X'₂, X'₃ independently of each other can represent a halogen atom, an amino, mercapto or alkenyloxy group, an alkyl group containing 1 to 40 carbon atoms or an OR¹ group, wherein R¹ is an alkyl group containing 1 to 40 carbon atoms or an acyl group containing 1 to 40 carbon atoms,
T and T' are independently of one another a straight chain or branched, substituted or unsubstituted alkylene group containing 1 to 20 carbon atoms,
Z and Z' are a carbamate group,
[Y] is an organic backbone.

8. Curable composition according to one of the claims 1 to 7, **characterised in that** the polymer A comprises on average at least more than 1.2, preferably more than 1.5, particularly preferably more than 1.8 reactive silyl groups in the molecule.

9. Curable composition according to one of the claims 1 to 8, **characterised in that** the polymer B comprises on average 1.2 to 1.8 reactive silyl groups in the molecule.

10. Adhesive, sealant or coating material comprising a curable composition according to one of the claims 1 to 9.

11. Preparation comprising a curable composition according to one of the claims 1 to 9.

12. Preparation, comprising
5 wt % to 80 wt % of a composition according to one of the claims 1 to 9 or a mixture of two or more of such compositions,
0 wt % to 50 wt % of a reactive diluent or a mixture of two or more reactive diluents,
0 wt % to 7 wt % of UV stabilisers,
0 wt % to 50 wt % of plasticisers,
0 wt % to 80 wt % of fillers.

13. Use of a curable composition according to one of the claims 1 to 9 or of a preparation according to one of the claims 11 or 12 as an adhesive, sealant or coating material.

## Revendications

1. Composition durcissable comprenant :
(i) au moins un polymère A comprenant au moins un groupe silyle réactif ; et
(ii) au moins un polymère B comprenant au moins un groupe silyle réactif ;
le nombre des groupes silyle réactifs dans (i) étant supérieur au nombre des groupes silyle réactifs dans (ii) et les groupes silyle réactifs étant à même de réticuler en formant des liaisons siloxane, le polymère B représentant un composé répondant à la formule générale (II) :
**(X₃ (X₂) (X₁) Si-T-Z- [Y]- G - R²** **(II)**
dans laquelle X₁, X₂, X₃ peuvent représenter indépendamment l'un de l'autre un atome d'halogène, un groupe amino, un groupe mercapto ou un groupe alcényloxy, un résidu alkyle contenant de 1 à 40 atomes de carbone ou bien un résidu OR¹, R¹ représentant un résidu alkyle contenant de 1 à 40 atomes de carbone ou bien un résidu acyle contenant de 1 à 40 atomes de carbone ;
T représente un résidu alkylène à chaîne droite ou ramifiée, substitué ou non substitué contenant de 1 à 20 atomes de carbone ;
Z représente un groupe carbamate, un groupe carboxyle, un groupe carbonate ou un groupe sulfonate ou encore un atome d'oxygène ;
[Y] représente un squelette de base organique ;
G représente un groupe carbamate, un groupe carboxyle, un groupe carbonate ou un groupe sulfonate ou encore un atome d'oxygène ou bien un groupe -E-D-E'-
dans lequel E représente un groupe carbamate, un groupe carboxyle, un groupe carbonate ou un groupe sulfonate ou encore un atome d'oxygène ;
E' représente un groupe carbamate, un groupe carboxyle, un groupe carbonate, un groupe sulfonate, un groupe urée ou un atome d'oxygène ;
D représente un résidu alkylène, un résidu acylène ou un résidu arylène à chaîne droite ou ramifiée, substitué ou non substitué contenant de 1 à 40 atomes de carbone ;
R² représente un résidu alkyle, un résidu acyle ou un résidu aryle, à chaîne droite ou ramifiée, substitué ou non substitué contenant de 1 à 40 atomes de carbone ou un groupe silyle qui n'est pas qualifié pour la formation d'une liaison siloxane.

2. Composition durcissable selon la revendication 1, **caractérisée en ce que** le polymère A représente un composé répondant à la formule générale (I) :
**(X₃) (X₂) (X₁)Si-T -Z- [Y]-Z'-T'- Si(X₁') (X₂')(X'₂)** **(I)**
dans laquelle X₁, X₂, X₃, X₁', X₂', X₃' peuvent représenter indépendamment l'un de l'autre un atome d'halogène, un groupe amino, un groupe mercapto ou un groupe alcényloxy, un résidu alkyle contenant de 1 à 40 atomes de carbone ou bien un résidu OR¹, R¹ représentant un résidu alkyle contenant de 1 à 40 atomes de carbone ou bien un résidu acyle contenant de 1 à 40 atomes de carbone ;
T et T' représentent, indépendamment l'un de l'autre, un résidu alkylène à chaîne droite ou ramifiée, substitué ou non substitué contenant de 1 à 20 atomes de carbone ;
Z et Z' représentent, indépendamment l'un de l'autre, un groupe carbamate, un groupe carboxyle, un groupe carbonate ou un groupe sulfonate ou encore un atome d'oxygène ;
[Y] représente un squelette de base organique.

3. Composition durcissable selon l'une quelconque des revendications 1 à 2, **caractérisée en ce que** le squelette de base organique (Y) présente une polydispersivité PD (M_{w}/Mₙ) inférieure à 4,8, de préférence inférieure à 1,7.

4. Composition durcissable selon l'une quelconque des revendications 1 à 3, **caractérisée en ce que** le squelette de base organique (Y) porte un ou plusieurs groupes silyle, qui ne sont pas habilités pour former des liaisons siloxane.

5. Composition durcissable selon l'une quelconque des revendications 1 à 4, **caractérisée en ce que** Z et Z' dans la formule (I) et/ou dans la formule (II) représentent un groupe carbamate.

6. Composition durcissable que l'on obtient par mise en réaction d'au moins un composé réactif vis-à-vis de groupes isocyanate avec au moins un premier composé de silane contenant un ou plusieurs groupes isocyanate et avec au moins un deuxième composé contenant un ou plusieurs groupes isocyanate, le produit réactionnel comprenant au moins deux composés polymères, le polymère A et le polymère B, qui présentent respectivement au moins un groupe silyle réactif, le nombre des groupes silyle réactifs dans le polymère A étant supérieur au nombre des groupes silyle réactifs dans le polymère B, le polymère B représentant un composé répondant à la formule générale (II) :
**(X₃) X₂) (X₁) Si-T-Z- [Y]- G - R²** **(II)**
dans laquelle X₁, X₂, X₃ peuvent représenter indépendamment l'un de l'autre un atome d'halogène, un groupe amino, un groupe mercapto ou un groupe alcényloxy, un résidu alkyle contenant de 1 à 40 atomes de carbone ou bien un résidu OR¹, R¹ représentant un résidu alkyle contenant de 1 à 40 atomes de carbone ou bien un résidu acyle contenant de 1 à 40 atomes de carbone ;
T représente un résidu alkylène à chaîne droite ou ramifiée, substitué ou non substitué contenant de 1 à 20 atomes de carbone ;
Z représente un groupe carbamate ;
[Y] représente un squelette de base organique ;
G représente un groupe carbamate ou un groupe -E-D-E'-
dans lequel E représente un groupe carbamate, un groupe carboxyle, un groupe carbonate ou un groupe sulfonate ou encore un atome d'oxygène ;
E' représente un groupe carbamate, un groupe carboxyle, un groupe carbonate, un groupe sulfonate ou un groupe urée ou encore un atome d'oxygène ;
D représente un résidu alkylène, un résidu acylène ou un résidu arylène à chaîne droite ou ramifiée, substitué ou non substitué contenant de 1 à 40 atomes de carbone ;
R² représente un résidu alkyle, un résidu acyle ou un résidu aryle, à chaîne droite ou ramifiée, substitué ou non substitué contenant de 1 à 40 atomes de carbone ou un groupe silyle qui n'est pas qualifié pour la formation d'une liaison siloxane.

7. Composition durcissable selon la revendication 6, **caractérisée en ce que** le polymère A représente un composé répondant à la formule générale (I) :
**(X₃) (X₂) (X₁)Sᵢ -T -Z- [Y]-Z'- T' - Si(X₁') (X₂')(X₃')** **(I)**
dans laquelle X₁, X₂, X₃, X₁', X₂', X₃' peuvent représenter indépendamment l'un de l'autre un atome d'halogène, un groupe amino, un groupe mercapto ou un groupe alcényloxy, un résidu alkyle contenant de 1 à 40 atomes de carbone ou bien un résidu OR¹, R¹ représentant un résidu alkyle contenant de 1 à 40 atomes de carbone ou bien un résidu acyle contenant de 1 à 40 atomes de carbone ;
T et T' représentent, indépendamment l'un de l'autre, un résidu alkylène à chaîne droite ou ramifiée, substitué ou non substitué contenant de 1 à 20 atomes de carbone ;
Z et Z' représentent un groupe carbamate ;
[Y] représente un squelette de base organique.

8. Composition durcissable selon l'une quelconque des revendications 1 à 7, **caractérisée en ce que** le polymère A contient en moyenne au moins plus de 1,2, de préférence plus de 1,5, de manière tout particulièrement préférée plus de 1,8 groupe silyle réactif dans la molécule.

9. Composition durcissable selon l'une quelconque des revendications 1 à 8, **caractérisée en ce que** le polymère B contient en moyenne de 1,2 à 1,8 groupe silyle réactif dans la molécule.

10. Substances adhésives, d'étanchéité ou d'enduction, contenant une composition durcissable selon l'une quelconque des revendications 1 à 9.

11. Préparations contenant une composition durcissable selon l'une quelconque des revendications 1 à 9.

12. Préparation contenant
de 5 % en poids à 80 % en poids d'une composition selon l'une quelconque des revendications 1 à 9 ou d'un mélange de deux desdites compositions ou plus ;
de 0 % en poids à 50 % en poids d'un diluant réactif ou d'un mélange de deux diluants réactifs ou plus ;
de 0 % en poids à 7 % en poids de stabilisateurs contre le rayonnement ultraviolet ;
de 0 % en poids à 50 % en poids de plastifiants ;
de 0 % en poids à 80 % en poids de matières de charge.

13. Utilisation d'une composition durcissable selon l'une quelconque des revendications 1 à 9 ou d'une préparation selon l'une quelconque des revendications 11 ou 12 à titre de substances adhésives, d'étanchéité ou d'enduction.
